(19)

Europäisches
Patentamt
European
Patent Office
Office européen
des brevets

(11) **EP 4 528 349 A1**

(12) **EUROPEAN PATENT APPLICATION**

(43) Date of publication:
26.03.2025 Bulletin 2025/13

(21) Application number: 24201632.7

(22) Date of filing: 20.09.2024

(51) International Patent Classification (IPC):
*G02B 9/10* (2006.01)      *G02B 13/00* (2006.01)
*G02B 15/14* (2006.01)

(52) Cooperative Patent Classification (CPC):
G02B 9/10; G02B 13/0045; G02B 13/009;
G02B 15/1421

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.09.2023 CN 202311235163**

(71) Applicant: **Jiangxi OFILM Optical Co. Ltd.
Nanchang, Jiangxi 330096 (CN)**

(72) Inventors:
• XU, Biao
  Nanchang 330096 (CN)
• WANG, Xianjie
  Nanchang 330096 (CN)

(74) Representative: **Zaboliene, Reda
Metida
Business center Vertas
Gyneju str. 16
01109 Vilnius (LT)**

(54) **OPTICAL SYSTEM, LENS MODULE, AND ELECTRONIC DEVICE**

(57) An optical system consists of six lenses having refractive power. From an object side to the image side along an optical axis, the six lenses sequentially include a first lens, a second lens, a third lens, a fourth lens, a fifth lens, and a sixth lens. The first lens has positive refractive power, and an object side surface of the first lens is convex near the optical axis. The second lens has negative refractive power, an object side surface of the second lens is convex near the optical axis, and an image side surface of the second lens is concave near the optical axis. The third lens has positive refractive power, an object side surface of the third lens is convex near the optical axis, and an image side surface of the third lens is convex near the optical axis. The fourth lens has negative refractive power, and an object side surface of the fourth lens is concave near the optical axis. The fifth lens has positive refractive power. The sixth lens has refractive power. The first to third lenses constitute a fixed lens group, the fourth to sixth lenses constitute a movable lens group, the fixed lens group is fixed relative to an imaging surface of the optical system, and the movable lens group is movable between the fixed lens group and the imaging surface along the optical axis.

Fig.1A

EP 4 528 349 A1

**Description**

FIELD

The subject matter relates to field of optical imaging, and more particularly, to an optical system, a lens module, and an electronic device.

BACKGROUND

With the development of technology, especially the rapid development of optical systems, the optical systems are widely used in smart devices such as mobile phones and tablet personal computers, and people's demand on compact design of lenses is higher and higher. A traditional focusing method is generally implemented by moving the entire lens via a focus motor, so that an imaging surface of the lens can coincides with a photosensitive surface of the photosensitive chip. Therefore, a large space (mechanical back focus) needs to be reserved between the lens and the photosensitive chip, which is not conducive to the compact design of a lens module. Moreover, moving the entire lens requires a lot of power from the focus motor, which results in a larger focus motor. It is not conducive to the compact design of the lens module and will cause a focusing speed to decrease. Therefore, it is urgent to design an optical system to solve the above problems.

SUMMARY

An object of the present application is to provide an optical system, a lens module, and an electronic device, and the optical system has a continuous internal focusing function and a characteristic of miniaturization.

In order to achieve the object of the present application, the present application provides the following technical solutions:

In a first aspect, an optical system consists of six lenses having refractive power. From an object side to an image side along an optical axis, the six lenses sequentially include a first lens, a second lens, a third lens, a fourth lens, a fifth lens, and a sixth lens. The first lens has positive refractive power, and an object side surface of the first lens is convex near the optical axis. The second lens has negative refractive power, an object side surface of the second lens is convex near the optical axis, and an image side surface of the second lens is concave near the optical axis. The third lens has positive refractive power, an object side surface of the third lens is convex near the optical axis, and an image side surface of the third lens is convex near the optical axis. The fourth lens has negative refractive power, and an object side surface of the fourth lens is concave near the optical axis. The fifth lens has positive refractive power. The sixth lens has refractive power. The first lens, the second lens, and the third lens constitute a fixed lens group, and the fourth lens, the fifth lens, and the fifth lens constitute a movable lens group. The fixed lens group is fixed relative to an imaging surface of the optical system, and the movable lens group is movable between the fixed lens group and the imaging surface along the optical axis. The optical system satisfies relational expression: $1.05<TTL/fmax<1.25$, $23°<FOV<30°$, $1.8<FNO<2.2$. Wherein, TTL is a distance from the object side surface of the first lens to the imaging surface of the optical system along the optical axis, fmax is a maximum effective focal length of the optical system, FOV is a maximum field of view of the optical system, and FNO is an aperture number of the optical system.

The present application utilizes the movable lens group to move between the fixed lens group and the imaging surface, which enables the optical system may to have the continuous internal focusing function. Moreover, a total optical length of the optical system does not change during the movement of the movable lens group, that is, the optical system has a fixed total optical length, which can further satisfy the requirement of compact design of the optical system. Also, focusing is achieved by moving only the movable lens group, which can further reduce the burden of the optical system on a motor, so that the effect of fast internal focusing of the optical system can be achieved by using a lower-power motor. By using six lenses with refractive power, stresses of light refraction may be distributed uniformly to each lens, thereby reducing the amount of light refracted by a single lens, and preventing the lens from being too curved, and thus avoiding increasing tolerance sensitivity. Also, the number of lenses in the movable lens group is set to three, so that the optical system can reduce the burden of the lens on the motor while ensuring clear imaging, power from the motor during focusing is lower, and an effect of fast focusing can be obtained. By reasonably distributing refractive power, aberrations may be corrected, thereby improving the imaging quality of optical systems. By reasonably setting surface shapes, the lenses may be more compatible with each other, which can not only reasonably utilize space but also transmit light gently, thereby reducing the introduction of aberrations. Thus, the imaging quality may be improved.

When the above relational expression is satisfied, the overall parameters of the optical system may be reasonably limited, and both the axial and radial dimensions may meet requirement of miniaturization, thereby reducing a space occupied by a lens body and leaving a sufficient moving space for the rear module to focus.

In a second aspect, the present application further provides a lens module. The lens module includes the optical system mentioned in any one of embodiments of the first aspect and a photosensitive chip, and the photosensitive chip is located on an image side of the optical system. By adding the optical system provided by the present application to the lens module, and by reasonably designing a surface shape and refractive power of each lens in the optical system and fixing the total optical length, the lens module can have the continuous internal focusing function and the characteristic of miniaturization.

In a third aspect, the present application further provides an electronic device. The electronic device includes a housing and the lens module mentioned in the second aspect, and the lens module is located in the housing. By adding the lens module provided by the present application to the electronic device, the electronic device can have the continuous internal focusing function, thereby obtaining a faster focusing speed. The compact design of the lens module can also save more space for installing other component.

BRIEF DESCRIPTION OF THE DRAWINGS

Implementations of the present technology will now be described, by way of embodiment, with reference to the attached figures. Obviously, the drawings are only some embodiments of the present disclosure. For those ordinary skill in the art, other drawings can be obtained based on these drawings without creative work.

FIG. 1A is a schematic diagram of an optical system according to a first embodiment when a movable lens group is located at a telephoto end.
FIG. 1B shows an aberration diagram of the optical system according to the first embodiment when the movable lens group is located at the telephoto end.
FIG. 1C is a schematic diagram of the optical system according to the first embodiment when the movable lens group is located at a wide-angle end.
FIG. 1D shows an aberration diagram of the optical system according to the first embodiment when the movable lens group is located at the wide-angle end.
FIG. 2A is a schematic diagram of an optical system according to a second embodiment when a movable lens group is located at a telephoto end.
FIG. 2B shows an aberration diagram of the optical system according to the second embodiment when the movable lens group is located at the telephoto end.
FIG. 2C is a schematic diagram of the optical system according to the second embodiment when the movable lens group is located at a wide-angle end.
FIG. 2D shows an aberration diagram of the optical system according to the second embodiment when the movable lens group is located at the wide-angle end.
FIG. 3A is a schematic diagram of an optical system according to a third embodiment when a movable lens group is located at a telephoto end.
FIG. 3B shows an aberration diagram of the optical system according to the third embodiment when the movable lens group is located at the telephoto end.
FIG. 33C is a schematic diagram of the optical system according to the third embodiment when the movable lens group is located at a wide-angle end.

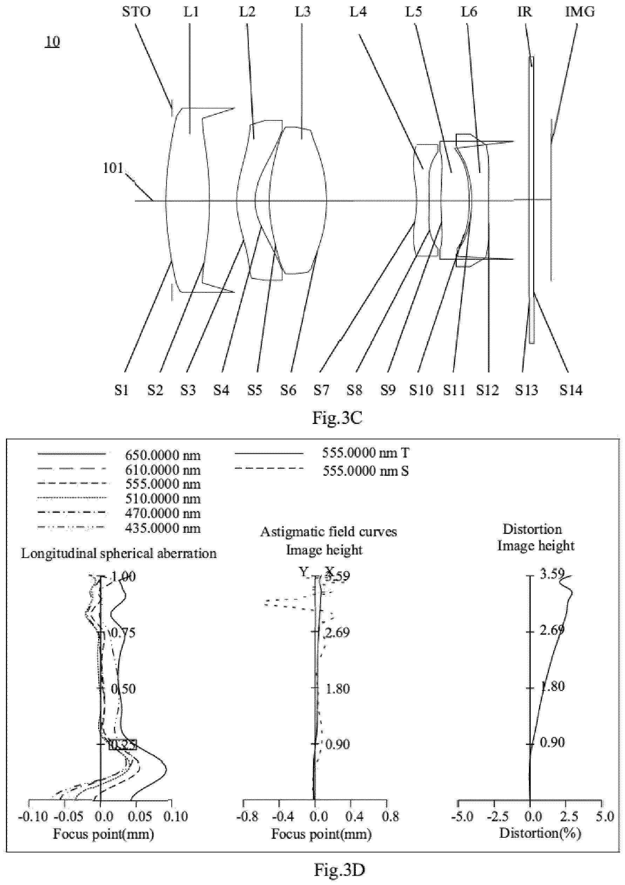

FIG. 3D shows an aberration diagram of the optical system according to the third embodiment when the movable lens group is located at the wide-angle end.

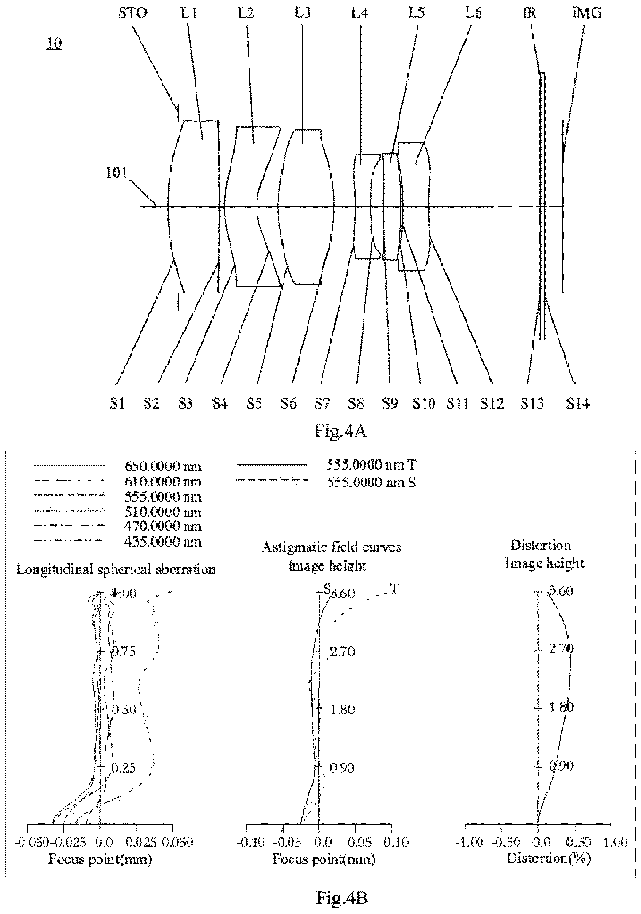

FIG. 4A is a schematic diagram of an optical system according to a fourth embodiment when a movable lens group is located at a telephoto end.
FIG. 4B shows an aberration diagram of the optical system according to the fourth embodiment when the movable lens group is located at the telephoto end.

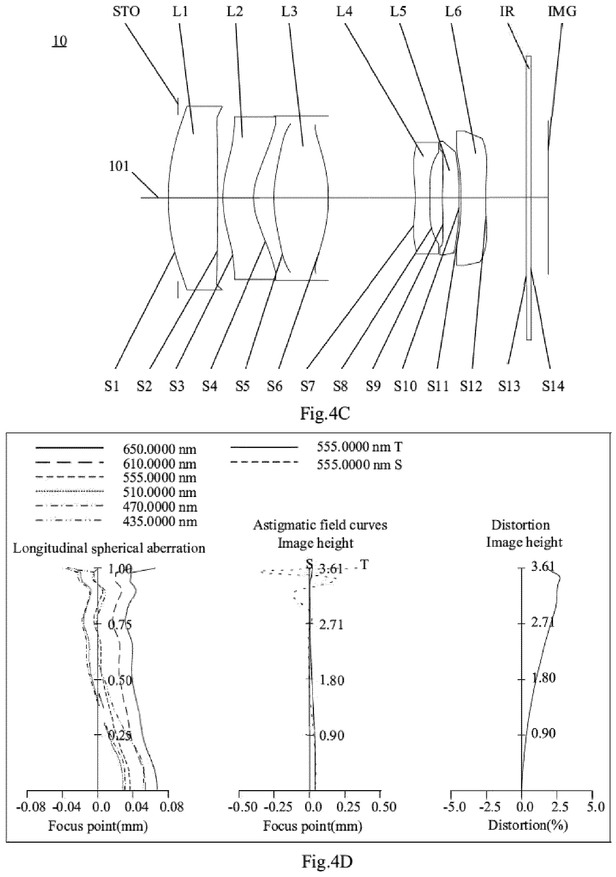

FIG. 4C is a schematic diagram of an optical system according to the fourth embodiment when the movable lens group is located at a wide-angle end.
FIG. 4D shows an aberration diagram of the optical system according to the fourth embodiment when the movable lens group is located at the wide-angle end.

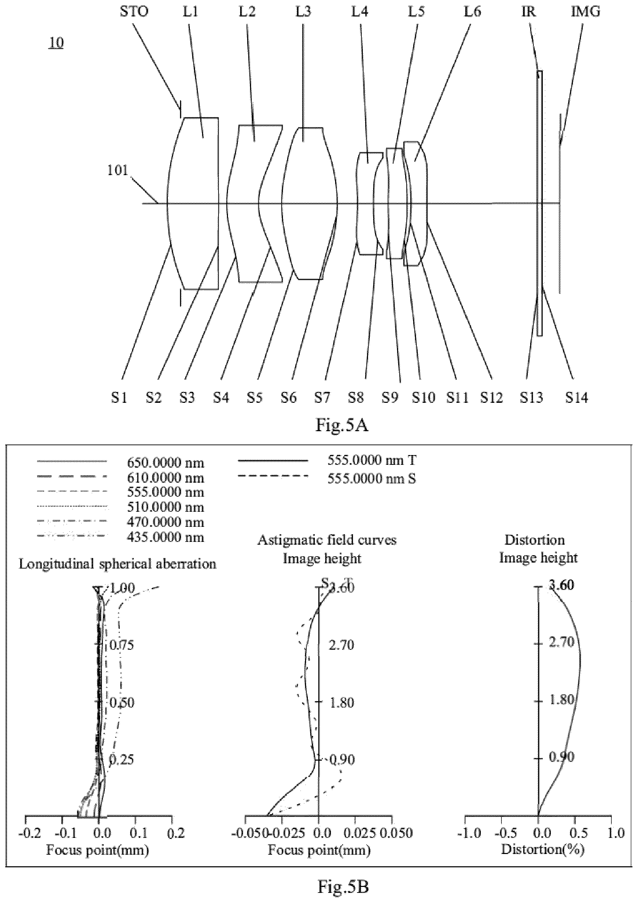

FIG. 5A is a schematic diagram of an optical system according to a fifth embodiment when a movable lens group is located at a telephoto end.
FIG. 5B shows an aberration diagram of the optical system according to the fifth embodiment when the movable lens group is located at the telephoto end.

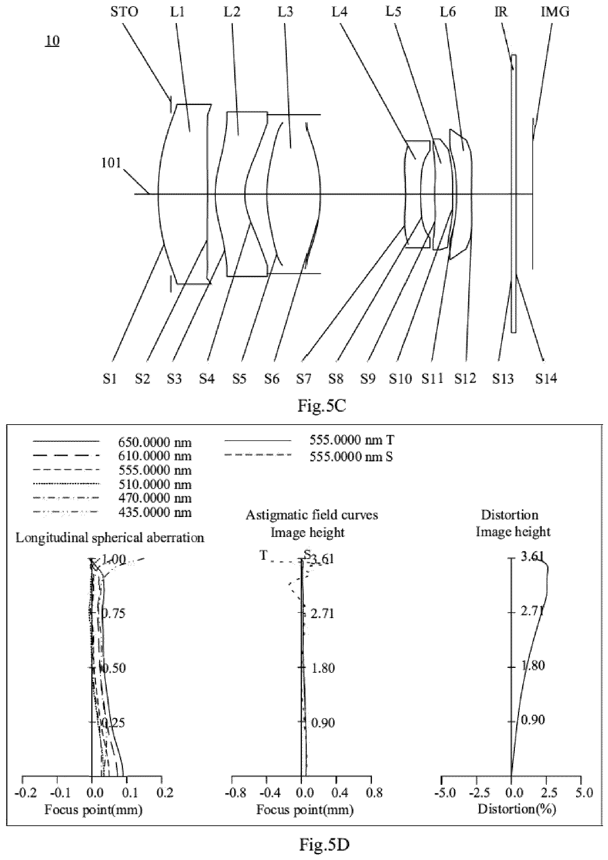

FIG. 5C is a schematic diagram of the optical system according to the fifth embodiment when the movable lens group is located at a wide-angle end.
FIG. 5D shows an aberration diagram of the optical system according to the fifth embodiment when the movable lens group is located at the wide-angle end.

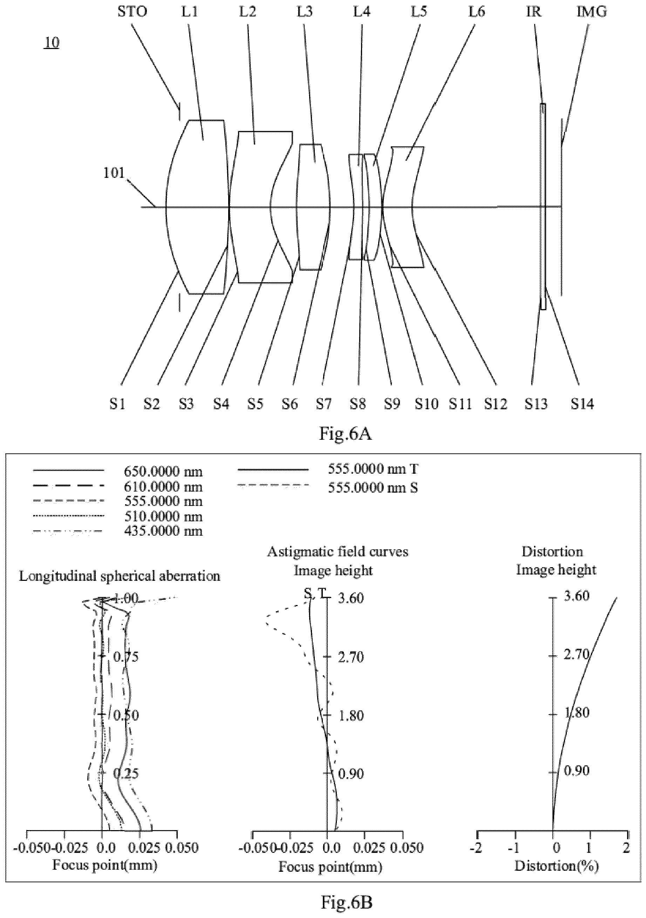

FIG. 6A is a schematic diagram of an optical system according to a sixth embodiment when a movable lens group is located at a telephoto end.

FIG. 6B shows an aberration diagram of the optical system according to the sixth embodiment when the movable lens group is located at the telephoto end.

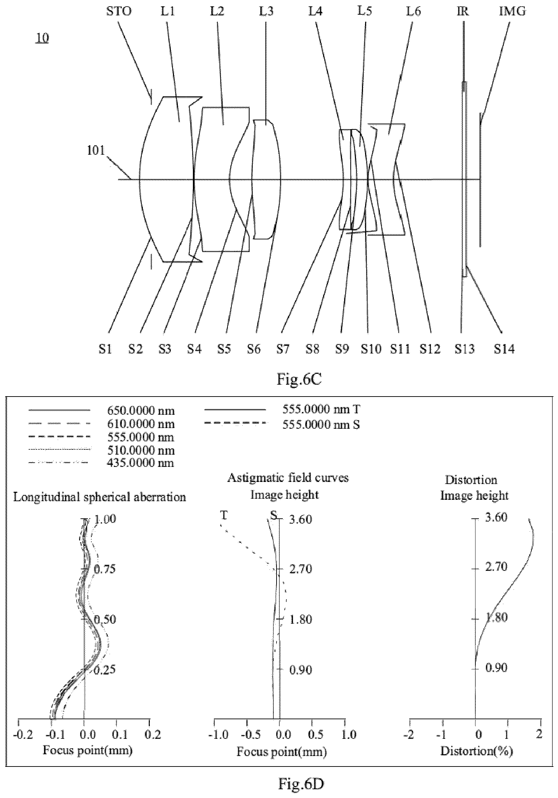

FIG. 6C is a schematic diagram of the optical system according to the sixth embodiment when the movable lens group is located at a wide-angle end.

FIG. 6D shows an aberration diagram of the optical system according to the sixth embodiment when the movable lens group is located at the wide-angle end.

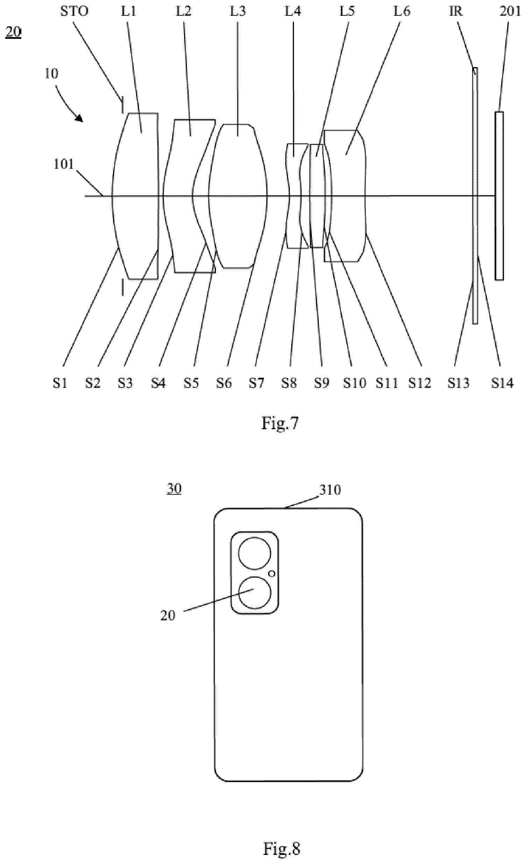

FIG. 7 is a schematic diagram of a lens module according to an embodiment the present application.

FIG. 8 is a schematic diagram of an electronic device according to an embodiment of the present application.

## DETAILED DESCRIPTION

Implementations of the present disclosure will now be described, by way of embodiments, with reference to the above figures. The embodiments are obviously a portion but not all of the embodiments of the present application. Based on the embodiments of the present application, other embodiments obtained by ordinary skill in the art without creative work will still fall within the scope of protection of the present application.

In a first aspect, the present application provides an optical system. The optical system consists of six lenses having refractive power. From an object side to an image side along an optical axis, the six lenses sequentially include a first lens, a second lens, a third lens, a fourth lens, a fifth lens, and a sixth lens. The first lens has positive refractive power, and an object side surface of the first lens is convex near the optical axis, light at a wide angle may be allowed to enter the optical system. The second lens has negative refractive power, an object side surface of the second lens is convex near the optical axis, and an image side surface of the second lens is concave near the optical axis, which may correct aberrations generated by the first lens. The third lens has positive refractive power, an object side surface of the third lens is convex near the optical axis, and an image side surface of the third lens is convex near the optical axis, which is favorable for adjusting a deflection angle of light, so that light passing through the third lens may gently enter the fourth lens, thereby achieving internal focusing. The fourth lens has negative refractive power, and an object side surface of the fourth lens is concave near the optical axis, and the Petzval number can be adjusted to reduce the generation of astigmatism and field curvature. The fifth lens has positive refractive power, which is favorable for correcting aberrations and improving overall imaging quality. The sixth lens has refractive power, which may correct off-axis aberrations. The first lens, the second lens, and the third lens constitute a fixed lens group, and the fourth lens, the fifth lens, and the fifth lens constitute a movable lens group. The fixed lens group is fixed relative to an imaging surface of the optical system, and the movable lens group moves between the fixed lens group and the imaging surface along the optical axis.

The present application utilizes the movable lens group to move between the fixed lens group and the imaging surface, which enables the optical system to have continuous internal focusing function. Moreover, a total optical length of the optical system does not change during the movement of the movable lens group, that is, the optical system has a fixed total optical length, which can further satisfy the requirement of compact design of the optical system. Also, focusing is achieved by moving only the movable lens group, which can further reduce the burden of the optical system on a motor, so that the effect of fast internal focusing of the optical system can be achieved by using a lower-power motor. By using six lenses with refractive power, stresses of light refraction may be distributed uniformly to each lens, thereby reducing the amount of light refracted by a single lens, and preventing the lens from being too curved, and thus avoiding increasing tolerance sensitivity. Also, the number of lenses in the movable lens group is set to three, so that the optical system can reduce the burden of the lens on the motor while ensuring clear imaging, power from the motor during focusing is lower, and an effect of fast focusing can be obtained. By reasonably distributing refractive power, aberrations may be corrected, thereby improving the imaging quality of optical systems. By reasonably setting surface shapes, the lenses may be more compatible with each other, so that the space may be used more reasonably, and the light may be transmitted gently, thereby reducing the introduction of aberrations. Thus, the imaging quality may be improved.

In some embodiments, the optical system satisfies relational expression: 1.05<TTL/fmax<1.25, TTL is a distance from the object side surface of the first lens to the imaging surface of the optical system along the optical axis, and fmax is a maximum effective focal length of the optical system. When the above relational expression is satisfied, the optical system may have telephoto characteristics, so that the total length of the optical system may be reduced, and it is easy to implant a module with the lens into an electronic device. Further, 1.1<TTL/fmax<1.2.

In some embodiments, the optical system satisfies relational expression: 23°<FOV<30°, and FOV is a maximum field of view of the optical system. When the above relational expression is satisfied, the optical system may have a small field of view, which significantly reduces a reserved space for focusing. Further, 23°<FOV<28°.

In some embodiments, the optical system satisfies relational expression: 1.8<FNO<2.2, and FNO is an aperture number of the optical system. When the above relational expression is satisfied, radial dimensions may meet requirement of miniaturization. Further, 1.9<FNO<2.1.

In some embodiments, the optical system satisfies relational expression: 0.4<f123/fmax<1. Wherein, f123 is a combined focal length of the first lens, the second lens, and the third lens. When the above relational expression is satisfied, the refractive power of the fixed lens group may be moderate, thereby avoiding excessive bending of the lenses. Further, 0.5<f123/fmax<0.9.

In some embodiments, the optical system satisfies relational expression: -3.5<f456/fmax<-0.4. Wherein, f456 is a combined focal length of the fourth lens, the fifth lens, and the sixth lens. When the above relational expression is satisfied, the refractive power of the movable lens group may be moderate, thereby effectively adjusting the focal length of the lenses. Further, -3<f456/fmax<-0.55.

In some embodiments, the optical system satisfies relational expression: -5<f456/F123<-1. When the above relational expression is satisfied, the refractive power of the fixed lens group and the movable lens group will not differ too much, which reduces the system sensitivity, improves the focusing efficiency, avoids the large spherical aberration caused by the fixed lens group, and thus improves the overall resolution of the optical system. Further, -4<f456/f123<-1.1.

In some embodiments, the optical system satisfies relational expression: 0.5<f1/fmax<1.5. Wherein, f1 is a focal length of the first lens. Further, 0.6<f1/fmax<1.3.

In some embodiments, the optical system satisfies relational expression: -0.9<f2/fmax<-0.4. Wherein, f2 is a focal length of the second lens. Further, -0.8<F2/fmax<-0.5.

In some embodiments, the optical system satisfies relational expression: 0.3<f3/fmax<0.9. Wherein, f3 is a focal length of the third lens. Further, 0.35<f3/fmax<0.8.

In some embodiments, the optical system satisfies relational expression: -0.9<f4/fmax<-0.4. Wherein, f4 is a focal length of the fourth lens. Further, -0.8<F4/fmax<-0.5.

In some embodiments, the optical system satisfies relational expression: 0.4<f5/fmax. Wherein, f5 is a focal length of the fifth lens. Further, 0.5<f5/fmax<8.

In some embodiments, the optical system satisfies relational expression: 0.7<|F6|/fmax<3. Wherein, f6 is a focal length of the sixth lens.

In some embodiments, the optical system satisfies relational expression: 0<|f6|/(|f1|+|f2|)<3. When the above relational expression is satisfied, the combination of the first lens and the second lens matches the refractive power of the sixth lens, and the aberrations generated by the light incident or emitted at a large angle between the two lenses can be canceled, thereby avoiding the introduction of high-order phase differences and improving the imaging quality. Further, 0.25<|f6|/(|f1|+|f2|)<2.

By satisfying the above-mentioned multiple relational expressions, the refractive power of each lens of the optical system may be moderate, which avoids the introduction of high-order aberrations, reduces the tolerance sensitivity of the system, controls the aberrations within a reasonable range, and improves the imaging quality of the optical system. The refractive power of each lens is reasonably distributed to ensure that the focal length is within a reasonable range, so that the principal point of the optical system is located on the object side, making it easier to miniaturize the optical system. Reasonable distribution of refractive power helps to reduce the comprehensive spherical aberration, chromatic aberration and distortion produced by the fixed lens group to a reasonable level, reducing the difficulty of designing the movable lens group. Reasonable distribution of lens refractive power can also balance the large spherical aberration produced by the fixed lens group, improve the overall resolution of the optical system, and strengthen the peripheral aberration correction of the optical system.

In some embodiments, the optical system satisfies relational expression: 0.4<R1/fmax<1.2. R1 is a radius of curvature of the object side surface of the first lens at the optical axis. When the above relational expression is satisfied, the incident angle of light may be reduced. Further, 0.45<R1/fmax<1.1.

In some embodiments, the optical system satisfies relational expression: R2/fmax<-1. R2 is a radius of curvature of the image side surface of the first lens at the optical axis. When the above relational expression is satisfied, the surface curvature is low, which is favorable for correcting off-axis aberrations and improving imaging quality.

In some embodiments, the optical system satisfies relational expression: 0.4<R3/fmax<1.1. R3 is a radius of curvature of the object side surface of the second lens at the optical axis. When the above relational expression is satisfied, the curvature of the surface may be moderate, and the incident light rays that are collected can pass through a mirror surface at a smaller angle. Further, 0.5<R3/fmax<1.

In some embodiments, the optical system satisfies relational expression: 0.15<R4/fmax<0.6. R4 is a radius of curvature of the image side surface of the second lens at the optical axis. When the above relational expression is satisfied, the light may be converged quickly. Further, 0.2<R4/fmax<0.45.

In some embodiments, the optical system satisfies relational expression: 0.4<R5/fmax<1. R5 is a radius of curvature of the object side surface of the third lens at the optical axis. When the above relational expression is satisfied, the deflection angle of the light may be corrected. Further, 0.5<R5/fmax<0.9.

In some embodiments, the optical system satisfies relational expression: -0.85<R6/fmax<-0.3. R6 is a radius of curvature of the image side surface of the third lens at the optical axis. When the above relational expression is satisfied, an axial surface shape of the image side surface of the third lens may be matched with an axial surface shape of the object side surface of the fourth lens, which may reduce tolerance sensitivity between lens groups, suppress the field curvature and distortion in the optical system, improve the overall imaging quality of the optical system, effectively control the rear focal length of the optical system, and avoid the total length of the optical system from being too long. Moreover, it is also favorable for reducing the surface complexity of the second lens and the third lens, thereby reducing the difficulty of molding the second lens and the third lens. Further, -0.75<R6/fmax<-0.4.

In some embodiments, the optical system satisfies relational expression: -3<R7/fmax<-0.15. R7 is a radius of curvature of the object side surface of the fourth lens at the optical axis. When the above relational expression is satisfied, the axial surface shape of the image side surface of the third lens may be matched with the axial surface shape of the object side surface of the fourth lens, which reduces the tolerance sensitivity between the lens groups. Further, -2.7<R7/fmax<-0.2.

In some embodiments, the optical system satisfies relational expression: 0.3<R8/fmax<0.7. R8 is a radius of curvature of the image side surface of the fourth lens at the optical axis. When the above relational expression is satisfied, the chromatic aberration introduced by the fourth lens may be reduced.

In some embodiments, the optical system satisfies relational expression: 0.3<R9/fmax<0.6. R9 is a radius of curvature of the object side surface of the fifth lens at the optical axis. When the above relational expression is satisfied, shapes of the image side surface of the fourth lens and the object side surface of the fifth lens may be similar, thereby avoiding the introduction of excessive aberrations.

In some embodiments, the optical system satisfies relational expression: 0.6<|R10|/fmax<8. R10 is a radius of curvature of the image side surface of the fifth lens at the optical axis. When the above relational expression is satisfied, the off-axis aberrations may be corrected.

In some embodiments, the optical system satisfies relational expression: 0.3<|R11|/fmax<4. R11 is a radius of curvature of the object side surface of the sixth lens at the optical axis. When the above relational expression is satisfied, the off-axis aberrations may be corrected.

In some embodiments, the optical system satisfies relational expression: 0.45<|R12|/fmax. R12 is a radius of curvature of the image side surface of the sixth lens at the optical axis. When the above relational expression is satisfied, the off-axis aberrations may be corrected.

In some embodiments, the optical system satisfies relational expression: 0.3<R7/R6<6. When the above relational expression is satisfied, the surface shape difference between the image side surface of the third lens and the object side surface of the fourth lens will not be too large, thereby reducing the tolerance sensitivity and improving the imaging quality during the focusing process. Further, 0.4<R7/R6<5.

In some embodiments, the optical system satisfies relational expression: -4<R7/R8<-1. When the above relational expression is satisfied, the refractive power of the fourth lens will not be too strong, thereby avoiding the introduction of high-order aberrations during the focusing process.

By setting reasonable surface shapes, the lenses may be more compatible with each other, which can not only reasonably utilize space but also transmit light gently, thereby effectively reducing the introduction of aberrations, and improving the imaging quality. The curvature of each lens is controlled within a reasonable range, thereby ensuring the processing yield, effectively correcting spherical aberration and astigmatism, and improving the imaging quality of the optical system. When the curvature of the lens is less than the above range, its object side surface is excessively curved, which will cause poor molding and affect the manufacturing yield. When the curvature of the lens is greater than the above range, the surface of the lens is too smooth, so that the difficulty of aberration correction is increased, and the relative brightness of the edge field of view is low, thereby affecting the imaging quality of the optical system.

0.05<SAG61/CT6<1.2. SAG61 is a distance from an intersection of the object side surface of the sixth lens and the optical axis to a position where the object side surface of the sixth lens has the maximum effective aperture along the optical axis, and CT6 is a thickness of the sixth lens at the optical axis. When the above relational expression is satisfied, the curvature of the sixth lens may be controlled, the incident angle on the imaging surface may be reduced, the relative illumination may be improved, the manufacturing difficulty may be reduced, and the incident light may be collected. Moreover, the distortion and field curvature generated by the first lens to the fifth lens may be corrected, so that the refractive power distribution near the imaging surface is more uniform. That is, the refractive power and thickness of the fifth lens in the vertical direction may be reasonably controlled to prevent the fifth lens from being too thin or too thick, thereby reducing the incident angle of light entering the imaging surface and reducing the sensitivity of the optical system. Further, 0.15<SAG61/CT6<1.

In some embodiments, the optical system satisfies relational expression: 1mm< Δd<5 mm. Δd is a maximum travel of the movable lens group on the optical axis, that is, the difference in distance from the image side surface of the third lens to the object side surface of the fourth lens along the optical axis in two states of the wide-angle end and the telephoto end. When the above relational expression is satisfied, the focus stroke may be controlled within a reasonable range. When it is below the lower limit, the stepping effect on the imaging may be too sensitive and the accuracy requirement for a motor may be too high. When it is above the upper limit, the focus stroke is too long, which is not conducive to miniaturization design. Further, 1.5mm<Δd<4mm.

In some embodiments, the optical system satisfies relational expression: 4<TTL/Δd<20. When the above relational expression is satisfied, the thickness and air gap of each lens may be moderate, which ensures that the amount of movement when the motor drives the movable lens group to move may be within a reasonable range, thereby reducing technical requirements for the motor and improving the adaptability and stability between components. Further, $5<TTL/\Delta d<15$.

In some embodiments, the optical system satisfies relational expression: $0.4<\Delta d/ImgH<1$. ImgH is half of an image height corresponding to the maximum field view. When the above relational expression is satisfied, it can ensure that the focusing stroke matches the imaging surface, achieving the miniaturization design. Further, $0.5<\Delta d/ImgH<0.9$.

In some embodiments, the optical system satisfies relational expression: $1.5<(CT1+CT2+CT3)/(CT4+CT5+CT6)<3.5$. Wherein, CT1 is a thickness of the first lens at the optical axis, CT2 is a thickness of the second lens at the optical axis, CT3 is a thickness of the third lens at the optical axis, CT4 is a thickness of the fourth lens at the optical axis, CTS is a thickness of the fifth lens at the optical axis, and CT6 is a thickness of the sixth lens at the optical axis. When the above relational expression is satisfied, a size of the fixed lens group is matched with a size of the movable lens group, which is favorable for balancing the distribution. Further, $1.8<(CT1+CT2+CT3)/(CT4+CT5+CT6)<3$.

In some embodiments, the optical system satisfies relational expression: $4<CTS/\Sigma CT<0.2<18$. $\Sigma CT$ is a sum of the thicknesses of the first lens to the sixth lens at the optical axis. When the above relational expression is satisfied, the miniaturization design of the movable lens group may be achieved, thereby reducing driving force requirements for a driving motor, and improving the focusing speed. Further, $5<CT5/\Sigma CT<0.2<16$.

In some embodiments, the optical system satisfies relational expression: $0.2<CT6/(CT4+CT5)<1.8$. When the above relational expression is satisfied, the thickness of the sixth lens may be moderate, which is favorable for designing the surface shape of the sixth lens, thereby correcting the off-axis aberration, and improving the imaging quality. Further, $0.3<CT6/(CT4+CT5)<1.5$.

In some embodiments, the optical system satisfies relational expression: $1.3<TDmin/(CT1+CT2+CT3)<2.5$. TDmin is a minimum distance from the object side surface of the first lens to the image side surface of the sixth lens along the optical axis. When the above relational expression is satisfied, the size of the fixed lens group may be moderate, which is conducive to the miniaturization design of the optical system. Further, $1.5<TDmin/(CT1+CT2+CT3)<2.3$.

In some embodiments, the optical system satisfies relational expression: $3.7<TDmin/(CT4+CTS+CT6)<5.5$. When the above relational expression is satisfied, the size of the movable lens group may be moderate, which is favorable for reducing a mass of the movable lens group, thereby reducing demand for driving force, and realizing the miniaturization design of the module. Further, $4<TDmin/(CT4+CT5+CT6)<5.3$.

In some embodiments, the optical system satisfies relational expression: $4<(CT4+CT5+CT6)/AT56$. AT56 is an air distance between the fifth lens and the sixth lens on the optical axis. When the above relational expression is satisfied, the distance between the sixth lens and the fifth lens may be reduced as much as possible, leaving sufficient travel space for the movable lens group. Further, $2.5<(CT1+CT2+CT3)/(CT4+CT5)<7$.

In some embodiments, the optical system satisfies relational expression: $0.35<CT3/CT1<1.7$. When the above relational expression is satisfied, sizes of the first lens and the third lens may be similar, thus preventing a single lens from being too thin or too curved. Further, $0.45<CT3/CT1<1.5$.

In some embodiments, the optical system satisfies relational expression: $0.2<ET6/CT6<2$. ET6 is a distance from a position where the object side surface of the sixth lens has the maximum effective aperture to a position where the image side surface of the sixth lens has the maximum effective aperture along the optical axis. When the above relational expression is satisfied, it is possible to avoid a large difference in the thickness ratio of the sixth lens, thereby improving the surface flatness. Further, $0.5<ET6/CT6<1.8$.

In some embodiments, the optical system satisfies relational expression: $0.3<CT1/SD1<0.9$. Wherein, SD1 is an effective aperture radius of the object side surface of the first lens. When the above relational expression is satisfied, the thickness of the first lens may be moderate, thereby avoiding the first lens from excessively occupying the axial space. Further, $0.4<CT1/SD1<0.8$.

In some embodiments, the optical system satisfies relational expression: $0.9<SD1/ImgH<1.2$. Wherein, SD12 is an effective aperture radius of the image side surface of the sixth lens, and ImgH is half of an image height corresponding to the maximum field of view. When the above relational expression is satisfied, the aperture of the object side surface of the first lens may be close to the size of the imaging surface, thus achieving radial miniaturization design. Further, $1<SD1/ImgH<1.1$

In some embodiments, the optical system satisfies relational expression: $1.35<SD1/SD12<1.9$. Wherein, SD12 is an effective aperture radius of the image side surface of the sixth lens. When the above relational expression is satisfied, a mirror aperture of the movable lens group may be controlled to be miniaturized, so that sufficient space may be reserved for the module driving structure. Further, $1.45<SD1/SD12<1.8$.

In some embodiments, the optical system satisfies relational expression: $4.5<TTL/ImgH<5$. When the above relational expression is satisfied, the optical system may be miniaturized in the axial direction and may be more easily assembled into an equipment. Further, $4.65<TTL/ImgH<4.85$.

In some embodiments, the optical system satisfies relational expression: $5.5°/mm<FOV/ImgH<8.5°/mm$. When the above relational expression is satisfied, the optical system may achieve the characteristics of wide viewing angle and large image surface. Further, 6°/mm <FOV/ImgH<8°/mm.

Each of the aforementioned features of the optical system can be utilized in various combinations for achieving the corresponding effects.

In some embodiments, the lenses thereof can be made of glass or plastic materials. When the lenses are made of glass materials, the distribution of the refractive power of the lenses in the optical system may be more flexible to design. The glass lens can either be made by grinding or molding. When the lenses are made of plastic materials, manufacturing costs can be effectively reduced. Further, surfaces of each lens can be arranged to be aspheric (ASP), since the aspheric surface of the lens is easy to form a shape other than a spherical surface so as to have more controllable variables for eliminating aberrations thereof, and to further decrease the required amount of lenses in the optical system. Therefore, the total optical length of the optical system can also be reduced. The aspheric surfaces may be formed by a plastic injection molding method, a glass molding method or other manufacturing methods.

In some embodiments, additives can be selectively added into any one (or more) material of the lenses so as to change the transmittance of the lens element in a particular wavelength range. In some embodiments, when a surface of the lens is aspheric, it indicates that entire optical effective region of the surface of the lens or a part thereof is aspheric.

In some embodiments, when the lenses have surfaces being convex and the convex surface position is not defined, it indicates that the aforementioned surfaces of the lens elements can be convex in the paraxial region thereof. When the lenses have surfaces being concave and the concave surface position is not been defined, it indicates that the aforementioned surfaces of the lenses can be concave in the paraxial region thereof. In the optical system of the present application, if the lens has positive refractive power or negative refractive power, or the focal length of the lens, all can be referred to the refractive power, or the focal length, in the paraxial region of the lens. In some embodiments, a critical point is a non-axial point of the lens surface where its tangent is perpendicular to the optical axis, and an inflection point is a point on a lens surface with a curvature changing from positive to negative or from negative to positive.

In some embodiments, at least one element with light path folding function can be selectively disposed between an imaged object and the imaging surface, such as a prism or a mirror, etc. Therefore, it is favorable for providing high flexible space arrangement of the optical system, so that the compactness of an electronic device would not be restricted by the optical total optical length of the optical system. In some embodiments, the optical system may also be selectively disposed with three or more light path folding elements, the type, amount and location of the light path folding element will not be limited to the present application.

In some embodiments, the optical system of the present application can be applied to 3D (three-dimensional) image capturing applications, in products such as digital cameras, mobile devices, digital tablets, smart TVs, surveillance systems, motion sensing input devices, driving recording systems, rearview camera systems, wearable devices, unmanned aerial vehicles, and other electronic imaging products.

In a second aspect, the present application further provides a lens module, the lens module includes the optical system of any one embodiment of the first aspect and a photosensitive chip, and the photosensitive chip is located on the image side of the optical system. By adding the optical system provided by the present application to the lens module, and by reasonably designing a surface shape and refractive power of each lens in the optical system and fixing the total optical length, the lens module can have the characteristics of continuous internal focusing function and miniaturization. In some embodiments, the lens module further includes a barrel member, a holder member or a combination thereof.

In a third aspect, the present application further provides an electronic device. The electronic device includes a housing and the lens module mentioned in the second aspect, and the lens module is located in the housing. By adding the lens module provided by the present application to the electronic device, the electronic device can have the continuous internal focusing function, thereby obtaining a faster focusing response speed. Compact design of the lens module design can also save more space for installing other devices. In some embodiments, the electronic device may further include a control unit, a display unit, a storage unit, a temporary storage unit or a combination thereof.

First embodiment

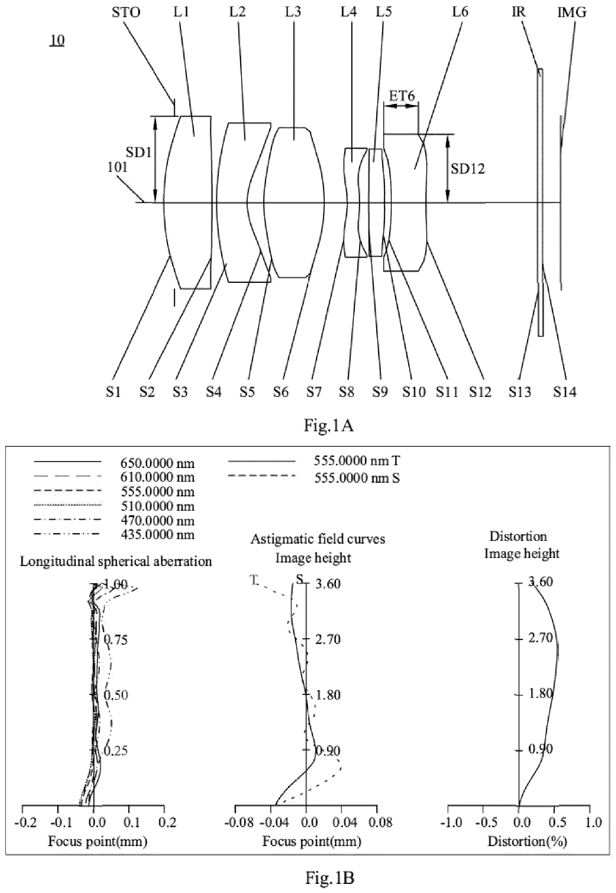

Referring to FIGS. 1A to 1D, an optical system of the first embodiment sequentially includes a first lens L1, a second lens L2, a third lens L3, a fourth lens L4, a fifth lens L5, and a sixth lens L6 from an object side to an image side.

The first lens L1 has positive refractive power, an object side surface S1 of the first lens L1 is convex near an optical axis, and an image side surface S2 of the first lens L1 is convex near the optical axis.

The second lens L2 has negative refractive power, an object side surface S3 of the second lens L2 is convex near the optical axis, and an image side surface S4 of the second lens L2 is concave near the optical axis.

The third lens L3 has positive refractive power, an object side surface S5 of the third lens L3 is convex near the optical axis, and an image side surface S6 of the third lens L3 is convex near the optical axis.

The fourth lens L4 has negative refractive power, and an object side surface S7 of the fourth lens L4 is concave near the optical axis, and an image side surface S8 of the fourth lens L4 is concave near the optical axis.

The fifth lens L5 has positive refractive power, an object side surface S9 of the fifth lens L5 is convex near the optical axis, and an image side surface S10 of the fifth lens L5 is concave near the optical axis.

The sixth lens L6 has negative refractive power, an object side surface S11 of the sixth lens L6 is concave near the optical axis, and an image side surface S12 of the sixth lens L6 is concave near the optical axis.

Moreover, the optical system also includes an aperture stop STO, an optical filter IR, and an imaging surface IMG. In this embodiment, the aperture stop STO is arranged in front of the first lens L1. In other embodiments, the aperture stop STO can also be arranged between two lenses, for example, the aperture stop STO is arranged between the first lens L1 and the second lens L2. The optical filter IR can be an infrared cutoff filter or a dual-channel optical filter, which is arranged between the sixth lens L6 and the imaging surface IMG and includes an object side surface S11 and an image side surface S12. The material of the optical filter IR is glass (GLASS), and a film can be coated on the lens. The materials of the first lens L1 to the sixth lens L6 are plastic. In other embodiments, all lenses may be glass lenses, or a combination of glass lenses and plastic lenses. An effective pixel area of the photosensitive chip is located on the imaging surface.

The first lens L1 to the third lens L3 constitute a fixed lens group G1, and the fourth lens L4 to the sixth lens L6 constitute a movable lens group G2. The fixed lens group is fixed relative to the imaging surface IMG. The movable lens group G2 can move between the first lens group G1 and the image plane IMG along extending directions of the optical axis 101, thereby achieving internal focusing of the optical system. During photographing, when an object distance gradually decreases, the movable lens group moves away from the fixed lens group along the optical axis; when the object distance gradually increases, the movable lens group moves toward the fixed lens group along the optical axis. In other embodiments, when the object distance gradually decreases, the movable lens group moves toward the fixed lens group along the optical axis; when the object distance gradually increases, the movable lens group moves away from the fixed lens group along the optical axis.

Table 1a shows parameters of the optical system of the embodiment. A reference wavelength of the focal length of the lens is 555 nm, and a reference wavelength of the refractive index and Abbe number of the lens is 587.5618 nm. The Y radius in Table 1a is the radius of curvature of the object side surface or image side surface with the corresponding surface number on the optical axis 101. The surface numerals S1 and S2 are the object side surface S1 and image side surface S2 of the first lens, respectively. That is, for a same lens, the surface with a smaller surface numeral is the object side surface of the lens, and the surface with a larger surface is the image side surface of the lens. In a "thickness" column of the first lens L1a, the first value is the thickness of the lens on the optical axis 101, and the second value is the distance from the image side surface of the lens to the next optical surface (the object side surface or the aperture surface of the next lens) on the optical axis 101. The units of the Y radius, thickness, and focal length are mm. Table 1b is the supplementary parameters of Table 1a, which are specifically the extremes of parameter variation when the movable lens group moves along the optical axis.

Table 1a

| First embodiment | | | | | | | | |
|---|---|---|---|---|---|---|---|---|
| Surface numeral | Lens numeral | Surface type | Y radius (mm) | Thickness (mm) | Material | refractive index | Abbe number | Focal length (mm) |
| object side | object side | sphere | infinity | A | | | | |
| STO | Aperture stop | sphere | infinity | -0.456 | | | | |
| 1 | L1 | asphere | 10.268 | 2.081 | plastic | 1.546 | 56.135 | 15.164 |
| 2 | | asphere | -150.126 | 0.201 | | | | |
| 3 | L2 | asphere | 12.189 | 1.322 | plastic | 1.667 | 20.370 | -11.014 |
| 4 | | asphere | 5.855 | 0.723 | | | | |
| 5 | L3 | asphere | 8.675 | 2.624 | plastic | 1.546 | 56.135 | 6.605 |
| 6 | | asphere | -8.273 | B | | | | |
| 7 | L4 | asphere | -28.100 | 0.514 | plastic | 1.546 | 56.135 | -10.902 |
| 8 | | asphere | 8.520 | 0.393 | | | | |
| 9 | L5 | asphere | 8.156 | 0.693 | plastic | 1.640 | 23.981 | 23.648 |
| 10 | | asphere | 17.096 | 0.292 | | | | |

(continued)

| Surface numeral | Lens numeral | Surface type | Y radius (mm) | Thickness (mm) | Material | refractive index | Abbe number | Focal length (mm) |
|---|---|---|---|---|---|---|---|---|
| | | | First embodiment | | | | | |
| object side | object side | sphere | infinity | A | | | | |
| STO | Aperture stop | sphere | infinity | -0.456 | | | | |
| 11 | L6 | asphere | -45.379 | 1.499 | plastic | 1.546 | 56.135 | -24.699 |
| 12 | | asphere | 19.405 | C | | | | |
| 13 | optical filter IR | sphere | infinity | 0.210 | glass | 1.518 | 64.166 | |
| 14 | | sphere | infinity | 0.784 | | | | |
| IMG | imaging surface | sphere | infinity | 0.000 | | | | |
| Note: The reference wavelength is 587.6nm | | | | | | | | |

Table 1b

| | A | B | C | FNO | FOV | f | TTL |
|---|---|---|---|---|---|---|---|
| telephoto end(Z1) | infinity | 1.007 | 4.839 | 1.970 | 26.780 | 15.050 | 17.180 |
| wide-angle end(Z2) | 50 | 4.007 | 1.839 | 2.040 | 24.640 | 10.200 | 17.180 |

As shown in Table 1a and Table 1b, f is the focal length of the optical system, FNO is the aperture number of the optical system, FOV is the maximum field of view of the optical system, and TTL is the distance from the object side surface of the first lens to the imaging surface IMG of the optical system along the optical axis 101.

In this embodiment, object side surfaces and the image side surfaces of the first lens L1 to the sixth lens L6 are all aspherical surfaces. In other embodiments, the object side surfaces and the image side surfaces of the first lens L1 to the sixth lens L6 may also be spherical surfaces, or a combination of spherical surfaces and aspherical surfaces. For example, the object side surface S1 of the first lens is a spherical surface, and the image side surface S2 is an aspherical surface. The surface shape x of aspherical surface may be expressed by, but not limited to, the following aspherical formula:

$$x = \frac{ch^2}{1 + \sqrt{1 - (k+1)c^2 h^2}} + \sum Aih^i$$

Wherein, x is a distance from a corresponding point of the aspherical surface to a plane tangent to the vertex, h is a distance from any point on the aspherical surface to the optical axis 101, c is a curvature of a vertex of the aspherical surface, k is cone constant, and Ai is a coefficient corresponding to the ith higher-order term in the above aspherical formula. Table 1c shows the coefficients of high-order terms A4, A6, A8, A10, A12, A14, A16, A18, A20, A22, A24, A26, A28, A30 of the aspherical mirror surfaces S1 to S14 that can be used in the first embodiment.

Table 1c

| Surface numeral | K | A4 | A6 | A8 | A10 |
|---|---|---|---|---|---|
| | | First embodiment | | | |
| | | Aspherical coefficient | | | |
| 1 | 0.00000E+00 | 7.02872E-02 | -1.71906E-02 | -5.02413E-03 | -7.52532E-03 |
| 2 | 0.00000E+00 | -9.65744E-02 | 3.10691E-02 | 1.93409E-02 | -4.82701E-02 |
| 3 | 0.00000E+00 | 4.53285E-01 | 9.77690E-02 | 5.26336E-02 | -5.02420E-02 |

(continued)

| First embodiment | | | | |
|---|---|---|---|---|
| Aspherical coefficient | | | | |
| Surface numeral | K | A4 | A6 | A8 | A10 |
| 4 | 0.00000E+00 | 5.20882E-01 | 1.37840E-01 | 7.93422E-02 | -3.83590E-02 |
| 5 | 0.00000E+00 | -2.03718E-01 | 1.36416E-01 | 4.44727E-02 | -4.36318E-02 |
| 6 | 0.00000E+00 | -2.33316E-01 | 5.88751E-02 | -1.29156E-02 | 3.81497E-03 |
| 7 | 0.00000E+00 | -3.82307E-01 | -8.67664E-02 | -2.91365E-02 | -7.65403E-03 |
| 8 | 0.00000E+00 | -3.39898E-01 | -1.71183E-01 | 4.07120E-02 | -4.83088E-02 |
| 9 | 0.00000E+00 | -3.75074E-01 | 1.05200E-01 | -3.95475E-02 | 1.67089E-02 |
| 10 | 0.00000E+00 | -3.73019E-01 | 1.19280E-01 | -3.49254E-02 | 1.55806E-02 |
| 11 | 0.00000E+00 | -2.77711E-01 | 2.77884E-02 | -1.86160E-02 | 4.01356E-03 |
| 12 | 0.00000E+00 | -4.98603E-01 | -3.41350E-02 | -7.99441E-03 | -3.26090E-03 |
| Surface numeral | A12 | A14 | A16 | A18 | A20 |
| 1 | 4.35114E-03 | -7.58744E-04 | 8.75765E-05 | 9.85646E-05 | -4.65039E-04 |
| 2 | 1.56521E-02 | -1.38336E-03 | 3.94090E-03 | -1.06432E-03 | -1.17135E-03 |
| 3 | 1.43035E-02 | 1.67533E-03 | 4.59045E-03 | -2.47679E-03 | -1.58429E-03 |
| 4 | 1.10002E-02 | 3.77038E-03 | 6.49849E-04 | 4.65920E-04 | -1.13724E-03 |
| 5 | 1.86102E-02 | -4.97224E-03 | 3.62437E-03 | -2.46728E-03 | 7.24309E-04 |
| 6 | 2.79967E-04 | -1.53375E-03 | 1.23396E-03 | -8.42673E-04 | 3.97265E-04 |
| 7 | 1.18612E-03 | 1.74363E-03 | 5.59648E-04 | 3.41536E-04 | 2.06900E-04 |
| 8 | 3.72546E-02 | -7.24875E-03 | 7.46763E-03 | -2.48381E-03 | 2.59559E-03 |
| 9 | -1.19057E-02 | 1.58886E-03 | -1.25998E-03 | 4.19991E-04 | -3.84113E-04 |
| 10 | -1.25164E-02 | 3.08366E-03 | 3.89391E-05 | 9.18116E-04 | -9.74730E-05 |
| 11 | -7.47434E-03 | 2.82720E-03 | 8.29281E-04 | 1.14987E-03 | 4.60508E-04 |
| 12 | -6.27075E-05 | 2.42580E-04 | -1.20408E-04 | 2.72997E-05 | 8.08994E-06 |
| Surface numeral | A22 | A24 | A26 | A28 | A30 |
| 1 | -5.92571E-05 | 2.96531E-05 | 5.03524E-06 | 4.45063E-05 | 0.00000E+00 |
| 2 | -2.83209E-03 | -3.67867E-04 | -6.64596E-04 | 0.00000E+00 | 0.00000E+00 |
| 3 | -2.97779E-03 | 8.97883E-05 | -5.56863E-04 | 3.34799E-04 | -8.38923E-05 |
| 4 | -1.74134E-03 | 2.36087E-05 | -1.94263E-04 | 9.82691E-07 | 1.76758E-04 |
| 5 | -1.96228E-03 | 8.23403E-04 | -1.33109E-04 | -1.07727E-05 | 1.28824E-04 |
| 6 | -4.36281E-04 | 3.49197E-04 | -1.65118E-04 | 1.08410E-04 | 1.05138E-05 |
| 7 | 2.25183E-04 | 2.10958E-04 | 1.07875E-04 | 4.90712E-05 | 9.06194E-06 |
| 8 | -5.12523E-04 | 7.11634E-04 | 2.41647E-04 | -2.89052E-05 | 3.53166E-07 |
| 9 | 9.03162E-05 | -1.22834E-04 | 1.94366E-05 | -3.95952E-06 | 0.00000E+00 |
| 10 | 1.56772E-04 | -1.66032E-04 | 1.94829E-05 | -1.84462E-05 | 0.00000E+00 |
| 11 | 4.57669E-04 | 1.40691E-04 | 1.90975E-04 | 7.01255E-05 | 4.12882E-05 |
| 12 | 4.93396E-05 | 7.35051E-05 | 8.12962E-05 | 4.28695E-05 | 3.21421E-05 |

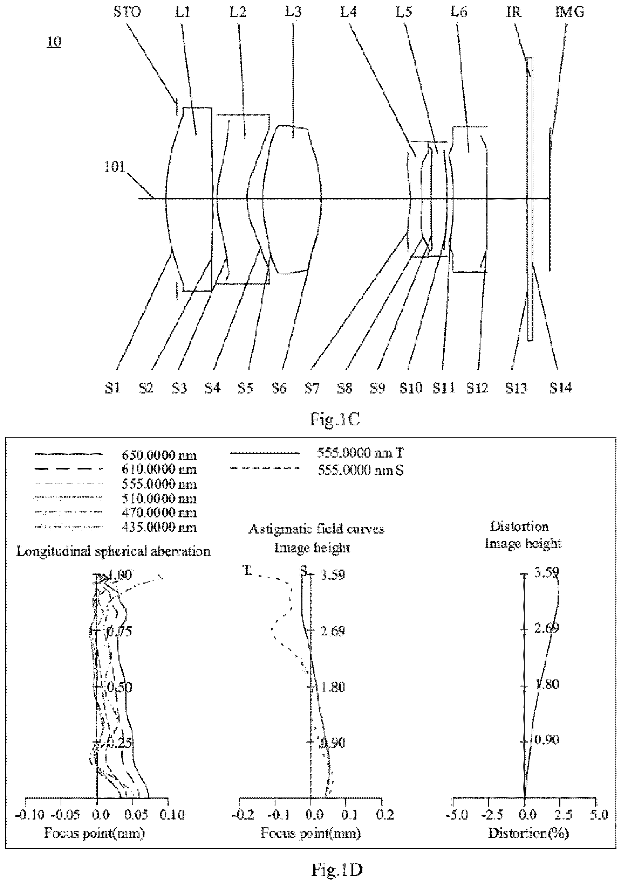

Referring to (a) of FIG. 1B, a longitudinal spherical aberration diagram of the optical system of the first embodiment when the movable lens group is located at the telephoto end is shown. Referring to (a) of FIG. 1D, a longitudinal spherical aberration diagram of the optical system of the first embodiment when the movable lens group is located at the wide-angle end is shown. The reference wavelengths are 650 nm, 610nm, 555nm, 510nm, 470nm, and 435nm. The horizontal coordinate along X-axis represents deviation of the focus point, and the vertical coordinate along Y-axis represents the normalized field of view. The longitudinal spherical aberration curve shows deviations of the converged focus point of light of different wavelengths after passing through each lens of the optical system. From (a) of FIG. 1B, the spherical aberration of the optical system of the first embodiment is good, indicating that the imaging quality of the optical system of this embodiment is good.

Referring to (b) of FIG. 1B, an astigmatism diagram of the optical system of the first embodiment when the movable lens group is located at the telephoto end is shown. Referring to (b) of FIG. 1D, an astigmatism diagram of the optical system of the first embodiment when the movable lens group is located at the wide-angle end is shown. The horizontal coordinate along X-axis represents deviation of the focus point, and the vertical coordinate along Y-axis represents the image height in mm. T of the astigmatism diagram represents the curvature of the imaging surface IMG in the tangential direction, and S represents the curvature of the imaging surface IMG in the sagittal direction. From (b) of FIG. 1B, the astigmatism of the optical system has been compensated.

Referring to (c) of FIG. 1B, a distortion diagram of the optical system of the first embodiment when the movable lens group is located at the telephoto end is shown. Referring to (c) of FIG. 1D, a distortion diagram of the optical system of the first embodiment when the movable lens group is located at the wide-angle end is shown. The horizontal coordinate along X-axis represents the distortion, and the vertical coordinate along Y-axis represents the image height. The distortion curve indicates the distortion value corresponding to different field of view. From (c) of FIG. 1B, the distortion of the optical system has been corrected at the wavelength. It can be seen from (a), (b), (c) in FIG. 1B and (a), (b), (c)FIG. 1D that the optical system of this embodiment has small aberration and good imaging quality.

Second embodiment

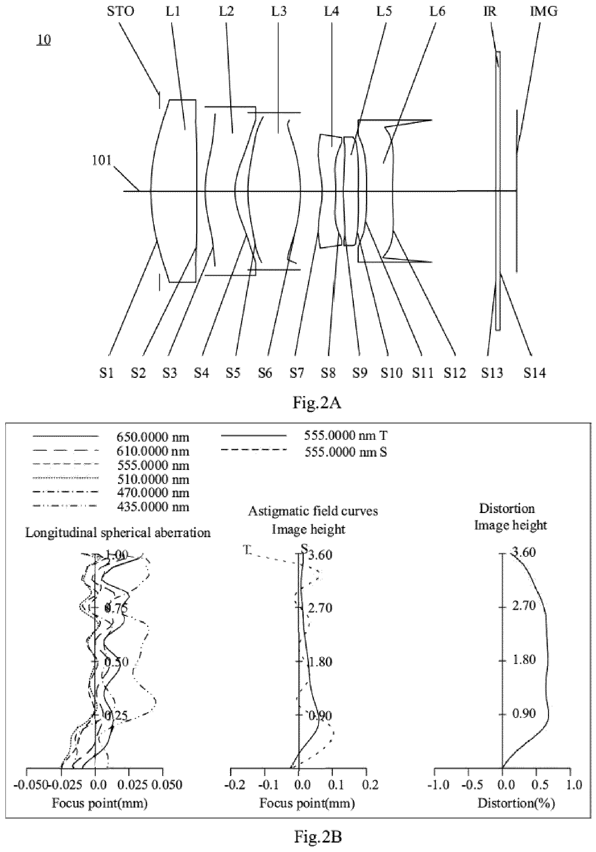

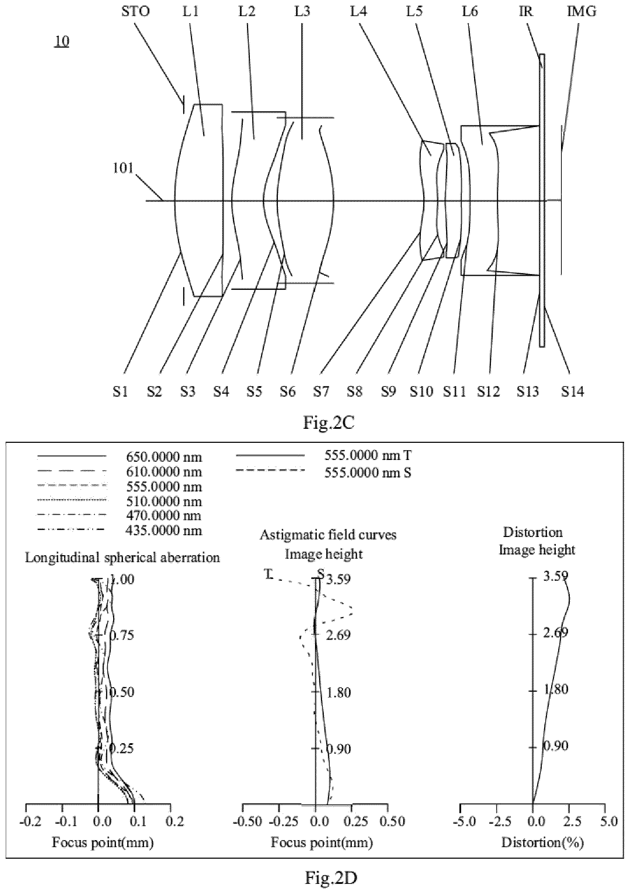

Referring to FIG. 2A to FIG. 2D, the difference between a structure of the second embodiment and a structure of the first embodiment is that the object side surface S11 of the sixth lens L6 is convex at the optical axis. The other of the structure of the second embodiment is referred to the other of the structure of first embodiment.

Table 2a

| Second embodiment | | | | | | | | |
|---|---|---|---|---|---|---|---|---|
| Surface numeral | Lens numeral | Surface type | Y radius (mm) | Thickness (mm) | Material | refractive index | Abbe number | Focal length (mm) |
| object side | object side | sphere | infinity | A | | | | |
| STO | Aperture stop | sphere | infinity | -0.398 | | | | |
| 1 | L1 | asphere | 10.374 | 2.150 | plastic | 1.546 | 56.135 | 15.783 |
| 2 | | asphere | -205.856 | 0.394 | | | | |
| 3 | L2 | asphere | 14.522 | 1.403 | plastic | 1.667 | 20.370 | -10.293 |
| 4 | | asphere | 6.156 | 0.604 | | | | |
| 5 | L3 | asphere | 8.770 | 2.484 | plastic | 1.546 | 56.135 | 6.221 |
| 6 | | asphere | -8.135 | B | | | | |
| 7 | L4 | asphere | -37.590 | 0.595 | plastic | 1.546 | 56.135 | -8.724 |
| 8 | | asphere | 9.498 | 0.347 | | | | |
| 9 | L5 | asphere | 5.350 | 0.709 | plastic | 1.640 | 23.981 | 18.944 |
| 10 | | asphere | 9.076 | 0.388 | | | | |
| 11 | L6 | asphere | 56.699 | 1.216 | plastic | 1.546 | 56.135 | -36.004 |
| 12 | | asphere | 14.484 | C | | | | |
| 13 | optical filter IR | sphere | infinity | 0.210 | glass | 1.518 | 64.166 | |
| 14 | | sphere | infinity | 0.773 | | | | |

(continued)

| | | | | | | | | |
|---|---|---|---|---|---|---|---|---|
| | Second embodiment | | | | | | | |
| Surface numeral | Lens numeral | Surface type | Y radius (mm) | Thickness (mm) | Material | refractive index | Abbe number | Focal length (mm) |
| object side | object side | sphere | infinity | A | | | | |
| STO | Aperture stop | sphere | infinity | -0.398 | | | | |
| IMG | imaging surface | sphere | infinity | 0.000 | | | | |
| | Note: The reference wavelength is 587.6nm | | | | | | | |

Table 2b

| | A | B | C | FNO | FOV | f | TTL |
|---|---|---|---|---|---|---|---|
| telephoto end(Z1) | infinity | 1.031 | 4.875 | 1.940 | 26.820 | 15.040 | 17.180 |
| wide-angle end(Z2) | 50 | 4.031 | 1.875 | 2.030 | 24.960 | 10.230 | 17.180 |

Table 2c shows the coefficients of the higher-order terms that can be used for each aspherical mirror surface in the second embodiment, wherein each aspherical surface shape can be defined by the formula provided in the first embodiment.

Table 2c

| | | | | | |
|---|---|---|---|---|---|
| | Second embodiment | | | | |
| | Aspherical coefficient | | | | |
| Surface numeral | K | A4 | A6 | A8 | A10 |
| 1 | 0.00000E+00 | 1.08675E-01 | -8.46806E-03 | -6.57042E-03 | -6.68800E-03 |
| 2 | 0.00000E+00 | -7.09159E-02 | 5.17794E-02 | 3.10026E-02 | -4.96921E-02 |
| 3 | 0.00000E+00 | 4.45933E-01 | 1.19841E-01 | 5.40053E-02 | -3.26964E-02 |
| 4 | 0.00000E+00 | 5.06068E-01 | 1.52001E-01 | 6.12133E-02 | -1.86734E-02 |
| 5 | 0.00000E+00 | -1.85429E-01 | 1.49823E-01 | 5.43545E-02 | -2.96380E-02 |
| 6 | 0.00000E+00 | -2.53551E-01 | 5.70895E-02 | -5.77290E-03 | 1.45404E-03 |
| 7 | 0.00000E+00 | -4.54667E-01 | -1.17539E-01 | -2.52851E-02 | -2.68920E-02 |
| 8 | 0.00000E+00 | -2.35130E-01 | -1.60703E-01 | 3.36780E-02 | -3.72047E-02 |
| 9 | 0.00000E+00 | -5.19753E-01 | 8.60619E-02 | -4.48564E-02 | 1.72408E-02 |
| 10 | 0.00000E+00 | -5.70783E-01 | 1.14253E-01 | -3.88332E-02 | 2.18908E-02 |
| 11 | 0.00000E+00 | -4.02570E-01 | 2.87717E-02 | -1.97051E-02 | 4.48559E-03 |
| 12 | 0.00000E+00 | -5.91788E-01 | -1.92914E-02 | -9.28140E-03 | -1.63597E-03 |
| Surface numeral | A12 | A14 | A16 | A18 | A20 |
| 1 | 3.31646E-03 | -4.38918E-04 | 3.86380E-04 | -7.41609E-05 | -4.01494E-04 |
| 2 | 1.06416E-02 | -3.04929E-03 | 6.38337E-03 | -3.83906E-03 | 2.35952E-03 |
| 3 | -8.42553E-03 | 7.19868E-03 | 5.96203E-03 | -2.73754E-03 | -1.10656E-03 |
| 4 | -5.32168E-03 | 1.00843E-02 | 5.99570E-03 | -4.60531E-03 | -2.44239E-03 |
| 5 | 3.79513E-03 | -7.15460E-04 | 1.17208E-02 | -6.01593E-03 | -3.87468E-03 |

(continued)

| Surface numeral | A12 | A14 | A16 | A18 | A20 |
|---|---|---|---|---|---|
| 6 | 1.06130E-03 | -7.91264E-04 | 8.28802E-04 | -3.20669E-04 | -7.67620E-04 |
| 7 | -2.66911E-04 | 3.64631E-03 | -4.61509E-03 | 5.23752E-03 | -4.18081E-03 |
| 8 | 3.35992E-02 | -8.31743E-03 | 3.57756E-03 | 1.06261E-03 | -9.96737E-05 |
| 9 | -9.67818E-03 | 1.46002E-04 | -1.48768E-03 | 6.92643E-04 | -3.66253E-04 |
| 10 | -7.99590E-03 | 6.99425E-03 | 2.57054E-03 | 7.16690E-04 | -1.67318E-03 |
| 11 | -6.56512E-03 | 2.36764E-03 | 1.56035E-03 | 1.29624E-03 | 2.29432E-04 |
| 12 | 9.61023E-04 | 1.71496E-03 | 5.60505E-04 | 1.37845E-04 | -1.46516E-05 |
| Surface numeral | A22 | A24 | A26 | A28 | A30 |
| 1 | -2.96484E-04 | -1.95001E-04 | 1.02882E-04 | 6.30817E-05 | 0.00000E+00 |
| 2 | -5.29003E-03 | 2.29811E-04 | -2.30381E-03 | 0.00000E+00 | 0.00000E+00 |
| 3 | -3.30975E-03 | -1.77489E-03 | -8.03821E-04 | -9.18744E-04 | 3.60021E-04 |
| 4 | -3.47545E-04 | -1.14061E-03 | -9.27544E-04 | -1.41883E-04 | 0.00000E+00 |
| 5 | 4.49855E-04 | 3.29627E-04 | -8.30390E-04 | 1.09548E-04 | 3.46783E-05 |
| 6 | 4.28254E-04 | -2.68906E-04 | 2.99572E-04 | -1.43605E-04 | 9.93728E-05 |
| 7 | 2.99185E-03 | -1.38485E-03 | 1.08094E-03 | 0.00000E+00 | 0.00000E+00 |
| 8 | 1.36440E-03 | 3.96455E-04 | 2.32692E-04 | 5.14233E-07 | 0.00000E+00 |
| 9 | 3.51804E-04 | -1.15024E-04 | 5.61155E-05 | -3.16806E-06 | 0.00000E+00 |
| 10 | -1.13778E-03 | -1.26030E-03 | -3.58007E-04 | -2.38026E-04 | 0.00000E+00 |
| 11 | 2.24726E-04 | -2.69392E-04 | 1.17501E-05 | -1.06443E-04 | 4.27635E-05 |
| 12 | -4.59451E-05 | -1.61430E-05 | -2.69238E-05 | -4.71000E-05 | 2.61220E-05 |

FIG. 2B is an aberration diagram of the optical system of the second embodiment when the movable lens group is located at the telephoto end. FIG. 2D is an aberration diagram of the optical system of the second embodiment when the movable lens group is located at the wide-angle end. The longitudinal spherical aberration curve shows the deviation of the focal point of light at different wavelengths after passing through each lens of the optical system. T of the astigmatism diagram represents the curvature of the imaging surface IMG in the tangential direction, and S represents the curvature of the imaging surface IMG in the sagittal direction. The distortion curve indicates the distortion value corresponding to different field of view. Referring to aberration diagrams of FIG. 2B and FIG. 2D, the longitudinal spherical aberration, the curvature of field, and the distortion of the optical system of the second embodiment have been controlled, thus the optical system of this embodiment has good imaging quality.

Third embodiment

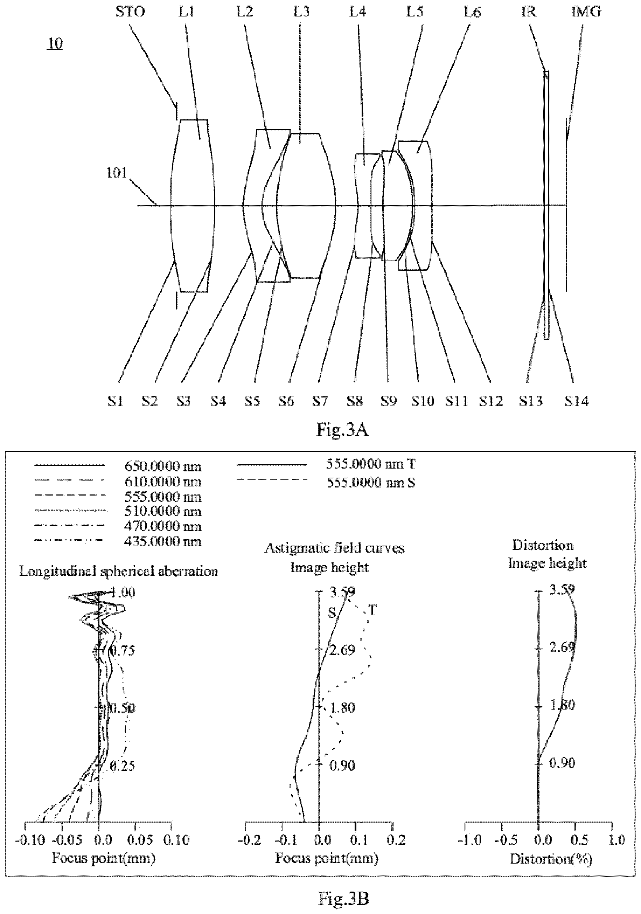

Referring to FIG. 3A to FIG. 3D, the difference between a structure of the third embodiment and a structure of the first embodiment is that the image side surface S10 of the fifth lens L5 is convex at the optical axis, and the image side surface S12 of the sixth lens L6 is convex at the optical axis. The other of the structure of the third embodiment is referred to the other of the structure of first embodiment.

Table 3a

| Surface numeral | Lens numeral | Surface type | Y radius (mm) | Thickness (mm) | Material | refractive index | Abbe number | Focal length (mm) |
|---|---|---|---|---|---|---|---|---|
| object side | object side | sphere | infinity | A | | | | |
| STO | Aperture stop | sphere | infinity | -0.270 | | | | |
| 1 | L1 | asphere | 15.556 | 1.936 | plastic | 1.546 | 56.135 | 14.386 |
| 2 | | asphere | -20.964 | 1.212 | | | | |
| 3 | L2 | asphere | 9.747 | 0.812 | plastic | 1.645 | 23.529 | -9.232 |
| 4 | | asphere | 4.789 | 0.636 | | | | |
| 5 | L3 | asphere | 8.075 | 2.554 | plastic | 1.546 | 56.135 | 6.030 |
| 6 | | asphere | -7.226 | B | | | | |
| 7 | L4 | asphere | -3.930 | 0.550 | plastic | 1.546 | 56.135 | -8.759 |
| 8 | | asphere | 6.331 | 0.525 | | | | |
| 9 | L5 | asphere | 7.525 | 1.264 | plastic | 1.570 | 37.316 | 8.896 |
| 10 | | asphere | -14.626 | 0.122 | | | | |
| 11 | L6 | asphere | -5.664 | 0.744 | plastic | 1.546 | 56.135 | -10.601 |
| 12 | | asphere | -279.171 | C | | | | |
| 13 | optical filter IR | sphere | infinity | 0.210 | glass | 1.518 | 64.166 | |
| 14 | | sphere | infinity | 0.773 | | | | |
| IMG | imaging surface | sphere | infinity | 0.000 | | | | |
| Note: The reference wavelength is 587.6nm | | | | | | | | |

Table 3b

| | A | B | C | FNO | FOV | f | TTL |
|---|---|---|---|---|---|---|---|
| telephoto end(Z1) | infinity | 0.981 | 4.821 | 1.970 | 26.780 | 14.980 | 17.140 |
| wide-angle end(Z2) | 50 | 3.981 | 1.821 | 2.040 | 23.780 | 10.163 | 17.140 |

Table 3c shows the coefficients of the higher-order terms that can be used for each aspherical mirror surface in the third embodiment, wherein each aspherical surface shape can be defined by the formula provided in the first embodiment.

Table 3c

| | | Third embodiment | | | |
|---|---|---|---|---|---|
| | | Aspherical coefficient | | | |
| Surface numeral | K | A4 | A6 | A8 | A10 |
| 1 | 0.00000E+00 | 4.81945E-03 | 3.96062E-02 | -1.33569E-02 | 6.49377E-05 |
| 2 | 0.00000E+00 | -2.46242E-01 | 5.95008E-02 | -1.69502E-02 | 7.50601E-04 |
| 3 | 0.00000E+00 | 5.25987E-01 | 8.85962E-02 | 4.10450E-02 | 4.64159E-03 |
| 4 | 0.00000E+00 | 7.30186E-01 | 1.49425E-01 | 4.65200E-02 | 1.08527E-02 |

(continued)

| Third embodiment | | | | |
|---|---|---|---|---|
| Aspherical coefficient | | | | |
| Surface numeral | K | A4 | A6 | A8 | A10 |
| 5 | 0.00000E+00 | -9.49997E-02 | 1.22186E-01 | -1.92793E-02 | 5.07859E-03 |
| 6 | 0.00000E+00 | -1.88405E-01 | 6.03001E-02 | -1.80381E-02 | 8.06674E-03 |
| 7 | 0.00000E+00 | 7.09931E-01 | -5.62582E-02 | 5.39481E-03 | 1.42368E-03 |
| 8 | 0.00000E+00 | -3.89887E-01 | -5.37266E-02 | 1.97478E-03 | -2.91549E-03 |
| 9 | 0.00000E+00 | -3.77000E-01 | 3.05990E-02 | -2.21380E-02 | 4.57537E-03 |
| 10 | 0.00000E+00 | -5.50507E-01 | 6.04065E-02 | -2.28616E-02 | 1.82551E-02 |
| 11 | 0.00000E+00 | -1.86062E-01 | 3.85667E-02 | 3.71294E-03 | 1.52005E-02 |
| 12 | 0.00000E+00 | -1.68494E-01 | -5.42415E-02 | 9.36661E-03 | -4.97746E-03 |
| Surface numeral | A12 | A14 | A16 | A18 | A20 |
| 1 | 2.77481E-03 | 3.99490E-04 | 2.11405E-04 | 1.18697E-04 | 2.64010E-04 |
| 2 | 5.17341E-03 | 3.15581E-03 | 1.24469E-03 | 1.31036E-03 | 2.82073E-04 |
| 3 | 6.86952E-03 | 1.07652E-02 | 2.42852E-03 | 4.85232E-03 | -9.54843E-04 |
| 4 | 8.38391E-03 | 5.30899E-03 | 6.30835E-03 | 8.72297E-03 | -2.37341E-03 |
| 5 | 4.20051E-03 | -5.35581E-03 | 4.61249E-03 | 5.56395E-03 | -3.82179E-03 |
| 6 | -2.96113E-03 | 3.27260E-04 | 6.30280E-05 | 1.38976E-04 | 2.01494E-04 |
| 7 | -9.28570E-04 | 3.57866E-04 | -1.49764E-04 | 1.55950E-05 | -3.58953E-06 |
| 8 | 1.05414E-02 | -9.41907E-04 | -3.18130E-04 | 2.38701E-03 | -2.04560E-03 |
| 9 | -2.08451E-03 | -6.56758E-04 | -5.72450E-04 | -2.53450E-04 | 1.13868E-04 |
| 10 | -9.27694E-03 | 9.15642E-04 | 1.77448E-03 | 1.86550E-03 | 1.39910E-03 |
| 11 | -7.78638E-03 | 5.20048E-03 | 4.08611E-03 | 2.22204E-03 | 3.88286E-04 |
| 12 | 2.19098E-03 | 1.25667E-03 | 9.35190E-04 | 6.26972E-04 | 3.09816E-04 |
| Surface numeral | A22 | A24 | A26 | A28 | A30 |
| 1 | -3.77340E-05 | -1.45045E-05 | 2.33366E-05 | -5.85887E-05 | 0.00000E+00 |
| 2 | 5.52907E-04 | -9.52585E-05 | 1.22515E-04 | 1.03835E-07 | 0.00000E+00 |
| 3 | 1.86672E-03 | -6.93300E-04 | 5.82944E-04 | -5.11093E-04 | 1.41062E-04 |
| 4 | 1.38599E-03 | 1.50946E-03 | -3.14745E-04 | -3.12799E-04 | 5.36104E-05 |
| 5 | -1.01751E-04 | 2.05380E-03 | -8.96259E-04 | -3.02809E-04 | 1.43276E-04 |
| 6 | -2.91509E-04 | 1.94775E-04 | -8.55515E-05 | -7.50231E-05 | -6.88626E-05 |
| 7 | -1.71655E-05 | -1.06595E-07 | 1.90419E-05 | 6.82467E-06 | -7.48633E-06 |
| 8 | 1.27967E-03 | -7.16116E-04 | 4.16657E-04 | 0.00000E+00 | 0.00000E+00 |
| 9 | 5.63808E-05 | 3.82804E-05 | 2.14076E-05 | 1.77279E-05 | 0.00000E+00 |
| 10 | 1.97936E-04 | 3.21859E-04 | 1.50780E-04 | -1.41799E-04 | 0.00000E+00 |
| 11 | -7.72234E-04 | -2.42913E-04 | -3.63162E-04 | -3.77810E-04 | 6.32879E-06 |
| 12 | 3.96387E-07 | -1.40120E-04 | -2.84696E-04 | -1.13960E-04 | -6.11404E-05 |

FIG. 3B is an aberration diagram of the optical system of the third embodiment when the movable lens group is located at the telephoto end. FIG. 3D is an aberration diagram of the optical system of the third embodiment when the movable lens group is located at the wide-angle end. The longitudinal spherical aberration curve shows the deviation of the focal point of light at different wavelengths after passing through each lens of the optical system. T of the astigmatism diagram represents the curvature of the imaging surface IMG in the tangential direction, and S represents the curvature of the imaging surface IMG in the sagittal direction. The distortion curve indicates the distortion value corresponding to different field of view. Referring to aberration diagrams of FIG. 3B and FIG. 3D, the longitudinal spherical aberration, the curvature of field, and the distortion of the optical system of the third embodiment have been controlled, thus the optical system of this embodiment has good imaging quality.

Fourth embodiment

Referring to FIG. 4A to FIG. 4D, the structure of the fourth embodiment is similar to that of the first embodiment.

Table 4a

| Fourth embodiment | | | | | | | | |
|---|---|---|---|---|---|---|---|---|
| Surface numeral | Lens numeral | Surface type | Y radius (mm) | Thickness (mm) | Material | refractive index | Abbe number | Focal length (mm) |
| object side | object side | sphere | infinity | A | | | | |
| STO | Aperture stop | sphere | infinity | -0.434 | | | | |
| 1 | L1 | asphere | 10.663 | 2.223 | plastic | 1.546 | 56.135 | 15.604 |
| 2 | | asphere | -177.106 | 0.226 | | | | |
| 3 | L2 | asphere | 11.967 | 1.398 | plastic | 1.677 | 19.238 | -11.052 |
| 4 | | asphere | 6.027 | 0.914 | | | | |
| 5 | L3 | asphere | 8.224 | 2.438 | plastic | 1.546 | 56.135 | 6.397 |
| 6 | | asphere | -8.731 | B | | | | |
| 7 | L4 | asphere | -6.778 | 0.656 | plastic | 1.546 | 56.135 | -8.849 |
| 8 | | asphere | 5.727 | 0.558 | | | | |
| 9 | L5 | asphere | 7.000 | 0.755 | plastic | 1.619 | 25.928 | 13.017 |
| 10 | | asphere | 51.188 | 0.082 | | | | |
| 11 | L6 | asphere | -19.606 | 1.117 | plastic | 1.546 | 56.135 | -15.866 |
| 12 | | asphere | 15.825 | C | | | | |
| 13 | optical filter IR | sphere | infinity | 0.210 | glass | 1.518 | 64.166 | |
| 14 | | sphere | infinity | 0.773 | | | | |
| IMG | imaging surface | sphere | infinity | 0.000 | | | | |
| Note: The reference wavelength is 587.6nm | | | | | | | | |

Table 4b

| | A | B | C | FNO | FOV | f | TTL |
|---|---|---|---|---|---|---|---|
| telephoto end(Z1) | infinity | 0.925 | 4.865 | 1.980 | 26.860 | 15.050 | 17.140 |
| wide-angle end(Z2) | 50 | 3.925 | 1.865 | 1.940 | 24.220 | 9.922 | 17.140 |

Table 4c shows the coefficients of the higher-order terms that can be used for each aspherical mirror surface in the fourth embodiment, wherein each aspherical surface shape can be defined by the formula provided in the first embodiment.

Table 4c

| Fourth embodiment | | | | |
|---|---|---|---|---|
| Aspherical coefficient | | | | |
| Surface numeral | K | A4 | A6 | A8 | A10 |
| 1 | 0.00000E+00 | 7.58683E-02 | -3.53149E-02 | 6.31892E-04 | -9.62401E-03 |
| 2 | 0.00000E+00 | -2.13869E-02 | -2.14678E-02 | 2.17001E-02 | -4.50917E-02 |
| 3 | 0.00000E+00 | 5.38605E-01 | 7.79604E-02 | 2.76456E-02 | -2.86299E-02 |
| 4 | 0.00000E+00 | 5.80703E-01 | 1.40439E-01 | 4.25334E-02 | -1.99383E-03 |
| 5 | 0.00000E+00 | -2.46666E-01 | 1.81306E-01 | -2.02308E-03 | -2.28221E-04 |
| 6 | 0.00000E+00 | -3.08282E-01 | 8.84449E-02 | -2.40728E-02 | 9.85871E-03 |
| 7 | 0.00000E+00 | 3.87080E-01 | -1.90746E-02 | -1.78456E-03 | 1.83694E-03 |
| 8 | 0.00000E+00 | -3.03191E-01 | -1.83943E-02 | 1.52258E-02 | 2.31352E-03 |
| 9 | 0.00000E+00 | -4.08139E-01 | 7.12720E-02 | -3.06020E-02 | 8.90767E-04 |
| 10 | 0.00000E+00 | -3.08757E-01 | 9.55048E-02 | -2.54058E-02 | -3.62627E-04 |
| 11 | 0.00000E+00 | -7.50794E-02 | 5.76070E-02 | 5.67730E-03 | -1.36648E-02 |
| 12 | 0.00000E+00 | -4.22524E-01 | -2.56919E-02 | 7.05268E-03 | -4.17647E-03 |
| Surface numeral | A12 | A14 | A16 | A18 | A20 |
| 1 | 4.48940E-03 | -1.18716E-03 | -1.70197E-04 | 2.43249E-04 | 3.16834E-05 |
| 2 | 1.19758E-02 | -3.99258E-03 | -8.69137E-04 | 1.80109E-05 | 5.02487E-04 |
| 3 | 8.46186E-03 | -3.26320E-03 | 2.09882E-04 | -7.18072E-04 | 1.43669E-03 |
| 4 | 2.66482E-03 | -6.46990E-04 | -2.51631E-04 | -5.52061E-04 | 7.47723E-04 |
| 5 | 1.20128E-03 | -4.22443E-03 | 1.68998E-03 | -1.27056E-03 | 6.49351E-04 |
| 6 | -3.87654E-03 | 5.62921E-04 | -4.45990E-05 | -2.60235E-04 | 2.91868E-04 |
| 7 | -6.28353E-04 | 1.75800E-04 | -4.56136E-05 | 8.41495E-06 | -7.10317E-07 |
| 8 | 5.70100E-03 | -1.03628E-03 | 7.02340E-04 | -2.30171E-04 | -8.72905E-05 |
| 9 | -2.97086E-03 | -1.82683E-03 | -3.36480E-04 | -5.72738E-04 | -6.07780E-05 |
| 10 | -4.64827E-03 | -4.22191E-03 | 3.33037E-03 | -1.33740E-03 | 1.42818E-03 |
| 11 | -5.29374E-03 | -2.02638E-03 | 4.54656E-03 | -3.03832E-03 | -4.80688E-05 |
| 12 | 9.72719E-04 | -7.85777E-04 | 1.01301E-04 | -9.67504E-05 | 2.44441E-04 |
| Surface numeral | A22 | A24 | A26 | A28 | A30 |
| 1 | 6.07607E-05 | -5.38850E-05 | 2.14299E-05 | -2.45900E-05 | 0.00000E+00 |
| 2 | 6.69716E-04 | -3.00927E-05 | 1.18959E-04 | 0.00000E+00 | 0.00000E+00 |
| 3 | 2.38627E-04 | -5.74385E-05 | 3.06298E-05 | -1.93097E-05 | 2.12980E-05 |
| 4 | 3.51327E-04 | -3.37331E-05 | -4.27112E-05 | -4.23162E-08 | 1.70085E-05 |
| 5 | 4.04576E-04 | -7.29021E-05 | -1.40393E-04 | -2.51792E-05 | 4.64015E-05 |
| 6 | -4.14852E-05 | 3.80827E-05 | -4.62165E-05 | -9.16294E-06 | 9.71435E-06 |
| 7 | -2.04659E-06 | -1.82847E-06 | 3.05697E-06 | -8.06916E-07 | -1.59102E-08 |
| 8 | 1.43549E-05 | 9.17642E-07 | -1.38832E-05 | -2.62323E-06 | 0.00000E+00 |
| 9 | -1.10729E-04 | -4.09708E-05 | -1.15173E-05 | -2.06136E-06 | 0.00000E+00 |
| 10 | -7.81812E-04 | 9.39773E-05 | -6.73900E-05 | -5.15632E-05 | 0.00000E+00 |
| 11 | -2.06825E-03 | 3.81467E-04 | 9.70102E-05 | 1.85376E-04 | 1.30173E-04 |

(continued)

| Surface numeral | A22 | A24 | A26 | A28 | A30 |
|---|---|---|---|---|---|
| 12 | 9.73429E-05 | 1.23706E-04 | -1.86748E-05 | -9.81957E-06 | -1.40932E-05 |

FIG. 4B is an aberration diagram of the optical system of the fourth embodiment when the movable lens group is located at the telephoto end. FIG. 4D is an aberration diagram of the optical system of the fourth embodiment when the movable lens group is located at the wide-angle end. The longitudinal spherical aberration curve shows the deviation of the focal point of light at different wavelengths after passing through each lens of the optical system. T of the astigmatism diagram represents the curvature of the imaging surface IMG in the tangential direction, and S represents the curvature of the imaging surface IMG in the sagittal direction. The distortion curve indicates the distortion value corresponding to different field of view. Referring to aberration diagrams of FIG. 4B and FIG. 4D, the longitudinal spherical aberration, the curvature of field, and the distortion of the optical system of the fourth embodiment have been controlled, thus the optical system of this embodiment has good imaging quality.

Fifth embodiment

Referring to FIG. 5A to FIG. 5D, the difference between a structure of the fifth embodiment and a structure of the first embodiment is that the image side surface S2 of the first lens L1 is concave at the optical axis, and the image side surface S10 of the fifth lens L5 is convex at the optical axis. The other of the structure of the fifth embodiment is referred to the other of the structure of first embodiment.

Table 5a

| Surface numeral | Lens numeral | Surface type | Y radius (mm) | Thickness (mm) | Material | refractive index | Abbe number | Focal length (mm) |
|---|---|---|---|---|---|---|---|---|
| object side | object side | sphere | infinity | A | | | | |
| STO | Aperture stop | sphere | infinity | -0.581 | | | | |
| 1 | L1 | asphere | 10.143 | 2.248 | plastic | 1.546 | 56.135 | 16.555 |
| 2 | | asphere | 15191.436 | 0.353 | | | | |
| 3 | L2 | asphere | 11.470 | 1.355 | plastic | 1.677 | 19.238 | -11.593 |
| 4 | | asphere | 5.775 | 1.011 | | | | |
| 5 | L3 | asphere | 8.128 | 2.431 | plastic | 1.546 | 56.135 | 6.375 |
| 6 | | asphere | -8.308 | B | | | | |
| 7 | L4 | asphere | -9.919 | 0.687 | plastic | 1.546 | 56.135 | -9.749 |
| 8 | | asphere | 5.188 | 0.644 | | | | |
| 9 | L5 | asphere | 7.997 | 0.828 | plastic | 1.619 | 25.928 | 12.081 |
| 10 | | asphere | -110.459 | 0.180 | | | | |
| 11 | L6 | asphere | -7.160 | 0.683 | plastic | 1.546 | 56.135 | -12.284 |
| 12 | | asphere | 109.097 | C | | | | |
| 13 | optical filter IR | sphere | infinity | 0.210 | glass | 1.518 | 64.166 | |
| 14 | | sphere | infinity | 0.773 | | | | |
| IMG | imaging surface | sphere | infinity | 0.000 | | | | |
| Note: The reference wavelength is 587.6nm | | | | | | | | |

Table 5b

|  | A | B | C | FNO | FOV | f | TTL |
|---|---|---|---|---|---|---|---|
| telephoto end(Z1) | infinity | 0.893 | 4.844 | 1.980 | 26.700 | 15.120 | 17.140 |
| wide-angle end(Z2) | 50 | 3.893 | 1.844 | 1.950 | 24.320 | 9.902 | 17.140 |

Table 5c shows the coefficients of the higher-order terms that can be used for each aspherical mirror surface in the fifth embodiment, wherein each aspherical surface shape can be defined by the formula provided in the first embodiment.

Table 5c

| Fifth embodiment | | | | |
|---|---|---|---|---|
| Aspherical coefficient | | | | |
| Surface numeral | K | A4 | A6 | A8 | A10 |
| 1 | 0.00000E+00 | 6.66639E-02 | -3.71377E-02 | 6.65178E-03 | -1.13108E-02 |
| 2 | 0.00000E+00 | -2.89074E-02 | -2.65863E-02 | 2.44403E-02 | -3.75291E-02 |
| 3 | 0.00000E+00 | 5.05390E-01 | 6.68993E-02 | 4.44548E-02 | -3.56903E-02 |
| 4 | 0.00000E+00 | 5.31895E-01 | 1.44273E-01 | 5.20669E-02 | -1.12033E-02 |
| 5 | 0.00000E+00 | -2.34026E-01 | 1.91237E-01 | -1.66103E-02 | -1.24207E-03 |
| 6 | 0.00000E+00 | -2.85493E-01 | 9.48632E-02 | -3.29832E-02 | 1.33291E-02 |
| 7 | 0.00000E+00 | 3.64269E-01 | -1.19212E-02 | -2.67826E-03 | 1.78020E-03 |
| 8 | 0.00000E+00 | -2.92637E-01 | -1.35230E-02 | 2.32279E-02 | -2.65588E-03 |
| 9 | 0.00000E+00 | -4.14742E-01 | 6.60874E-02 | -2.60541E-02 | -3.63572E-03 |
| 10 | 0.00000E+00 | -2.63840E-01 | 1.04692E-01 | -1.53766E-02 | -1.02872E-02 |
| 11 | 0.00000E+00 | 1.12609E-01 | 2.08677E-02 | 3.87892E-02 | -1.98900E-02 |
| 12 | 0.00000E+00 | -3.66024E-01 | -7.68292E-02 | 1.98868E-02 | -6.72799E-03 |
| Surface numeral | A12 | A14 | A16 | A18 | A20 |
| 1 | 4.80579E-03 | -1.03455E-03 | 2.77388E-04 | -1.18925E-04 | 1.12380E-05 |
| 2 | 6.92078E-03 | 3.64102E-04 | 1.12051E-03 | 9.15940E-04 | 2.39301E-05 |
| 3 | 6.58808E-03 | -5.60168E-04 | 3.96832E-03 | 6.07846E-05 | 1.04643E-04 |
| 4 | 2.09769E-03 | -2.19737E-03 | 2.91324E-03 | 1.26788E-03 | -2.39845E-04 |
| 5 | 1.54312E-03 | -5.14480E-03 | 2.97033E-03 | 9.16015E-04 | -4.42425E-04 |
| 6 | -4.36519E-03 | -6.05478E-05 | 7.65252E-04 | -2.81481E-04 | 1.82025E-04 |
| 7 | -4.37142E-04 | 1.63464E-05 | -4.08876E-06 | 1.32665E-05 | -8.22778E-06 |
| 8 | 7.54766E-03 | -3.78032E-03 | 1.13995E-03 | -4.54315E-04 | 1.11434E-04 |
| 9 | -3.04700E-03 | -3.84122E-03 | -1.13179E-03 | -9.80031E-04 | -4.83126E-04 |
| 10 | -5.58663E-03 | -5.71728E-03 | 4.62833E-03 | -1.99943E-03 | -1.23632E-04 |
| 11 | -3.82227E-03 | -5.52520E-03 | 4.99675E-03 | -3.43470E-03 | -5.51381E-04 |
| 12 | 5.32548E-03 | 5.84749E-04 | 1.87656E-03 | 1.72255E-04 | 7.94967E-04 |
| Surface numeral | A22 | A24 | A26 | A28 | A30 |
| 1 | 4.61189E-05 | 1.06085E-05 | -1.17237E-05 | -1.39063E-05 | 0.00000E+00 |
| 2 | 3.62270E-04 | 1.48521E-04 | 4.53117E-05 | 0.00000E+00 | 0.00000E+00 |
| 3 | 2.63207E-04 | 5.68898E-05 | 1.07961E-04 | -7.37347E-05 | 1.10608E-05 |

(continued)

| Surface numeral | A22 | A24 | A26 | A28 | A30 |
|---|---|---|---|---|---|
| 4 | 2.64636E-04 | 6.68170E-05 | 1.79116E-05 | 2.16456E-05 | -2.02787E-05 |
| 5 | 5.50478E-06 | 1.17156E-04 | -7.31880E-05 | 4.52835E-05 | -2.29271E-05 |
| 6 | -1.98170E-05 | 3.59494E-05 | -1.63074E-05 | 1.39793E-06 | -1.49648E-06 |
| 7 | 2.97587E-06 | -1.32554E-06 | 5.29807E-06 | -2.98672E-06 | -9.95018E-08 |
| 8 | -5.94121E-05 | 2.69114E-05 | -1.54130E-05 | -7.83791E-08 | 0.00000E+00 |
| 9 | -2.90399E-04 | -1.52197E-04 | -6.26336E-05 | -2.14752E-05 | 0.00000E+00 |
| 10 | -8.26180E-04 | -8.24564E-05 | 1.29539E-05 | 3.31604E-05 | 0.00000E+00 |
| 11 | -1.52103E-03 | -2.98599E-04 | -1.60742E-04 | -5.48904E-05 | -1.12963E-05 |
| 12 | 9.64801E-05 | 1.97335E-04 | -5.72737E-05 | -2.61146E-05 | -2.07002E-05 |

FIG. 5B is an aberration diagram of the optical system of the fifth embodiment when the movable lens group is located at the telephoto end. FIG. 5D is an aberration diagram of the optical system of the fifth embodiment when the movable lens group is located at the wide-angle end. The longitudinal spherical aberration curve shows the deviation of the focal point of light at different wavelengths after passing through each lens of the optical system. T of the astigmatism diagram represents the curvature of the imaging surface in the tangential direction, and S represents the curvature of the imaging surface in the sagittal direction. The distortion curve indicates the distortion value corresponding to different field of view. Referring to aberration diagrams of FIG. 5B and FIG. 5D, the longitudinal spherical aberration, the curvature of field, and the distortion of the optical system of the fifth embodiment have been controlled, thus the optical system of this embodiment has good imaging quality.

Sixth embodiment

Referring to FIG. 6A to FIG. 6D, the difference between a structure of the sixth embodiment and a structure of the first embodiment is that the image side surface S8 of the fourth lens L4 is convex at the optical axis, the object side surface S9 of the fifth lens L5 is concave at the optical axis, and the image side surface S10 of the fifth lens L5 is convex at the optical axis. The other of the structure of the fifth embodiment is referred to the other of the structure of first embodiment.

Table 6a

| First embodiment | | | | | | | | |
|---|---|---|---|---|---|---|---|---|
| Surface numeral | Lens numeral | Surface type | Y radius (mm) | Thickness (mm) | Material | refractive index | Abbe number | Focal length (mm) |
| object side | object side | sphere | infinity | A | | | | |
| STO | Aperture stop | sphere | infinity | -0.599 | | | | |
| 1 | L1 | asphere | 7.504 | 2.727 | plastic | 1.547 | 56.114 | 10.514 |
| 2 | | asphere | -21.372 | 0.030 | | | | |
| 3 | L2 | asphere | 8.471 | 1.782 | plastic | 1.641 | 23.902 | -8.809 |
| 4 | | asphere | 3.110 | 1.127 | | | | |
| 5 | L3 | asphere | 13.123 | 1.465 | plastic | 1.547 | 56.114 | 10.829 |
| 6 | | asphere | -10.354 | B | | | | |
| 7 | L4 | asphere | -5.040 | 0.380 | plastic | 1.547 | 56.114 | -11.685 |
| 8 | | asphere | -24.547 | 0.290 | | | | |

(continued)

| | | | | First embodiment | | | | |
|---|---|---|---|---|---|---|---|---|
| Surface numeral | Lens numeral | Surface type | Y radius (mm) | Thickness (mm) | Material | refractive index | Abbe number | Focal length (mm) |
| object side | object side | sphere | infinity | A | | | | |
| STO | Aperture stop | sphere | infinity | -0.599 | | | | |
| 9 | L5 | asphere | -11.044 | 0.546 | plastic | 1.668 | 20.377 | 92.341 |
| 10 | | asphere | -9.141 | 0.035 | | | | |
| 11 | L6 | asphere | 6.317 | 1.285 | plastic | 1.547 | 56.114 | 31.398 |
| 12 | | asphere | 7.254 | C | | | | |
| 13 | optical filter IR | sphere | infinity | 0.210 | glass | 1.519 | 64.166 | |
| 14 | | sphere | infinity | 0.709 | | | | |
| IMG | imaging surface | sphere | infinity | 0.000 | | | | |
| Note: The reference wavelength is 587.6nm | | | | | | | | |

Table 6b

| | A | B | C | FNO | FOV | f | TTL |
|---|---|---|---|---|---|---|---|
| telephoto end(Z1) | infinity | 1.046 | 5.549 | 1.940 | 26.680 | 14.930 | 17.180 |
| wide-angle end(Z2) | 50 | 3.147 | 3.448 | 1.920 | 26.330 | 14.000 | 17.180 |

Table 6c shows the coefficients of the higher-order terms that can be used for each aspherical mirror surface in the sixth embodiment, wherein each aspherical surface shape can be defined by the formula provided in the first embodiment.

Table 6c

| | | Sixth embodiment | | | |
|---|---|---|---|---|---|
| | | Aspherical coefficient | | | |
| Surface numeral | K | A4 | A6 | A8 | A10 |
| 1 | -1.52922E+01 | 5.62748E-01 | -8.18934E-02 | 1.07468E-02 | -3.57616E-03 |
| 2 | -9.90000E+01 | 2.39520E-02 | -2.43315E-02 | 8.15583E-03 | 3.41892E-03 |
| 3 | 0.00000E+00 | -1.59487E-01 | -8.18183E-03 | 7.93368E-04 | -1.07373E-03 |
| 4 | -1.59166E+00 | -1.05062E-01 | -9.86950E-03 | -5.83420E-04 | -3.24245E-04 |
| 5 | 0.00000E+00 | -7.94047E-02 | -8.93724E-03 | 2.00116E-03 | -7.27123E-04 |
| 6 | -2.68970E+01 | -1.09565E-01 | 3.55353E-03 | 4.38783E-03 | -1.02048E-03 |
| 7 | -7.10933E+00 | 1.78850E-01 | -2.23252E-02 | 7.60049E-03 | -2.91732E-03 |
| 8 | 8.53702E+01 | 1.19901E-01 | -6.86515E-03 | 2.70963E-03 | -1.70865E-03 |
| 9 | 0.00000E+00 | 1.52295E-01 | -8.19894E-02 | 1.29181E-02 | -5.39228E-03 |
| 10 | 0.00000E+00 | 6.22996E-02 | -3.67037E-02 | 2.74121E-03 | -5.09977E-04 |
| 11 | 0.00000E+00 | 2.72890E-01 | 2.90250E-02 | 6.82725E-03 | 1.85820E-03 |
| 12 | 0.00000E+00 | 2.57256E-01 | 6.37032E-02 | -1.39159E-02 | 1.72663E-02 |

(continued)

| Surface numeral | A12 | A14 | A16 | A18 | A20 |
|---|---|---|---|---|---|
| 1 | 1.22107E-03 | -7.70879E-05 | 2.32467E-04 | 5.74383E-05 | 3.11587E-05 |
| 2 | 3.53627E-03 | 9.63880E-04 | 1.66855E-03 | 1.89888E-04 | 2.22407E-04 |
| 3 | 8.62954E-04 | -2.73274E-04 | 3.83064E-05 | -3.12676E-06 | 5.75817E-07 |
| 4 | 4.19120E-04 | 2.70428E-05 | -5.00778E-05 | 2.07450E-05 | -4.31414E-06 |
| 5 | 4.31725E-04 | 1.01012E-04 | -4.71815E-05 | 5.55823E-06 | -1.50692E-06 |
| 6 | 7.92837E-04 | -9.47875E-05 | -7.11335E-05 | 2.20584E-05 | -7.46669E-06 |
| 7 | 9.38978E-04 | -9.54867E-05 | -2.92990E-05 | 1.07694E-05 | -8.69174E-07 |
| 8 | 4.02724E-04 | 8.80663E-05 | -2.24346E-05 | -2.44248E-05 | 1.45659E-05 |
| 9 | 4.74423E-04 | 1.46848E-03 | 2.95166E-05 | 8.18424E-07 | -4.52115E-04 |
| 10 | 1.09510E-03 | 5.93739E-04 | -1.92151E-04 | -4.67284E-04 | -3.01603E-04 |
| 11 | 6.08075E-04 | 3.12331E-04 | -3.52162E-06 | -2.59184E-04 | -2.96817E-04 |
| 12 | -1.23017E-02 | 9.14728E-03 | -6.38611E-03 | 4.03149E-03 | -2.59446E-03 |
| Surface numeral | A22 | A24 | A26 | A28 | A30 |
| 1 | 0.00000E+00 | 0.00000E+00 | 0.00000E+00 | 0.00000E+00 | 0.00000E+00 |
| 2 | 0.00000E+00 | 0.00000E+00 | 0.00000E+00 | 0.00000E+00 | 0.00000E+00 |
| 3 | 0.00000E+00 | 0.00000E+00 | 0.00000E+00 | 0.00000E+00 | 0.00000E+00 |
| 4 | 0.00000E+00 | 0.00000E+00 | 0.00000E+00 | 0.00000E+00 | 0.00000E+00 |
| 5 | 0.00000E+00 | 0.00000E+00 | 0.00000E+00 | 0.00000E+00 | 0.00000E+00 |
| 6 | 0.00000E+00 | 0.00000E+00 | 0.00000E+00 | 0.00000E+00 | 0.00000E+00 |
| 7 | 0.00000E+00 | 0.00000E+00 | 0.00000E+00 | 0.00000E+00 | 0.00000E+00 |
| 8 | 0.00000E+00 | 0.00000E+00 | 0.00000E+00 | 0.00000E+00 | 0.00000E+00 |
| 9 | 4.83581E-05 | -8.67103E-05 | 4.90031E-05 | -5.98891E-05 | 2.81225E-05 |
| 10 | -1.41905E-04 | -8.58401E-05 | -4.92320E-05 | -1.70126E-05 | -2.40947E-06 |
| 11 | -1.85512E-04 | -1.02956E-04 | -8.10136E-05 | -3.90518E-05 | -6.49195E-06 |
| 12 | 1.57677E-03 | -9.77888E-04 | 5.29947E-04 | -2.40103E-04 | 9.06682E-05 |

FIG. 6B is an aberration diagram of the optical system of the fifth embodiment when the movable lens group is located at the telephoto end. FIG. 6D is an aberration diagram of the optical system of the fifth embodiment when the movable lens group is located at the wide-angle end. The longitudinal spherical aberration curve shows the deviation of the focal point of light at different wavelengths after passing through each lens of the optical system. T of the astigmatism diagram represents the curvature of the imaging surface in the tangential direction, and S represents the curvature of the imaging surface in the sagittal direction. The distortion curve indicates the distortion value corresponding to different field of view. Referring to aberration diagrams of FIG. 6B and FIG. 6D, the longitudinal spherical aberration, the curvature of field, and the distortion of the optical system of the fifth embodiment have been controlled, thus the optical system of this embodiment has good imaging quality.

Table 7 shows values of relational expressions for parameters in the optical system 10 of the first to sixth embodiments.

Table 7

| Formula | First embodiment | Second embodiment | Third embodiment | Fourth embodiment | Fifth embodiment | Sixth embodiment |
|---|---|---|---|---|---|---|
| f1/fmax | 1.008 | 1.049 | 0.960 | 1.037 | 1.095 | 0.704 |
| f2/fmax | -0.732 | -0.684 | -0.616 | -0.734 | -0.767 | -0.590 |

(continued)

| Formula | First embodiment | Second embodiment | Third embodiment | Fourth embodiment | Fifth embodiment | Sixth embodiment |
|---|---|---|---|---|---|---|
| f3/fmax | 0.439 | 0.414 | 0.403 | 0.425 | 0.422 | 0.725 |
| f4/fmax | -0.724 | -0.580 | -0.585 | -0.588 | -0.645 | -0.783 |
| f5/fmax | 1.571 | 1.260 | 0.594 | 0.865 | 0.799 | 6.185 |
| f6/fmax | -1.641 | -2.394 | -0.708 | -1.054 | -0.812 | 2.103 |
| R1/fmax | 0.682 | 0.690 | 1.038 | 0.708 | 0.671 | 0.503 |
| R2/fmax | -9.975 | -13.687 | -1.399 | -11.768 | 1004.725 | -1.431 |
| R3/fmax | 0.810 | 0.966 | 0.651 | 0.795 | 0.759 | 0.567 |
| R4/fmax | 0.389 | 0.409 | 0.320 | 0.400 | 0.382 | 0.208 |
| R5/fmax | 0.576 | 0.583 | 0.539 | 0.546 | 0.538 | 0.879 |
| R6/fmax | -0.550 | -0.541 | -0.482 | -0.580 | -0.549 | -0.693 |
| R7/fmax | -1.867 | -2.499 | -0.262 | -0.450 | -0.656 | -0.338 |
| R8/fmax | 0.566 | 0.632 | 0.423 | 0.381 | 0.343 | -1.644 |
| R9/fmax | 0.542 | 0.356 | 0.502 | 0.465 | 0.529 | -0.740 |
| R10/fmax | 1.136 | 0.603 | -0.976 | 3.401 | -7.305 | -0.612 |
| R11/fmax | -3.015 | 3.770 | -0.378 | -1.303 | -0.474 | 0.423 |
| R12/fmax | 1.289 | 0.963 | -18.636 | 1.052 | 7.215 | 0.486 |
| TTL/ImgH | 4.772 | 4.772 | 4.774 | 4.761 | 4.761 | 4.772 |
| $\Delta$d | 3.000 | 3.000 | 3.000 | 3.000 | 3.000 | 2.101 |
| SAG61/CT6 | 0.211 | 0.271 | 0.940 | 0.169 | 0.459 | 0.341 |
| TTL/fmax | 1.14 | 1.14 | 1.14 | 1.14 | 1.13 | 1.15 |
| \|f6\|/(\|f1\|+\|f2\|) | 0.94 | 1.38 | 0.45 | 0.60 | 0.44 | 1.62 |
| R7/R8 | -3.298 | -3.958 | -0.621 | -1.184 | -1.912 | 0.205 |
| TTL/$\Delta$d | 5.727 | 5.727 | 5.713 | 5.713 | 5.713 | 8.176 |
| R7/R6 | 3.397 | 4.621 | 0.544 | 0.776 | 1.194 | 0.487 |
| (CT1+CT2+CT3)/ (CT4+CT5+CT6) | 2.228 | 2.395 | 2.072 | 2.397 | 2.746 | 2.702 |
| $\Sigma$ CT/CT5 | 12.603 | 12.069 | 6.218 | 11.383 | 9.943 | 14.994 |
| CT6/(CT4+CT5) | 1.242 | 0.932 | 0.410 | 0.792 | 0.451 | 1.389 |
| TDmin/ (CT1+CT2+CT3) | 1.883 | 1.875 | 2.138 | 1.864 | 1.875 | 1.793 |
| TDmin/ (CT4+CT5+CT6) | 4.194 | 4.492 | 4.432 | 4.467 | 5.147 | 4.845 |
| (CT4+CT5+CT6)/ AT56 | 9.267 | 6.495 | 20.967 | 30.829 | 12.211 | 63.171 |
| CT1/SD1 | 0.545 | 0.555 | 0.510 | 0.584 | 0.588 | 0.709 |
| (CT1+CT2+CT3)/ (CT4+CT5) | 4.993 | 4.630 | 2.923 | 4.294 | 3.983 | 6.451 |
| CT3/CT1 | 1.261 | 1.155 | 1.319 | 1.097 | 1.081 | 0.537 |
| ET6/CT6 | 0.775 | 1.057 | 1.665 | 1.056 | 1.047 | 1.037 |
| SD1/ImgH | 1.061 | 1.076 | 1.057 | 1.057 | 1.062 | 1.068 |

(continued)

| Formula | First embodiment | Second embodiment | Third embodiment | Fourth embodiment | Fifth embodiment | Sixth embodiment |
|---|---|---|---|---|---|---|
| SD1/SD12 | 1.586 | 1.694 | 1.719 | 1.591 | 1.525 | 1.523 |
| f123/fmax | 0.588 | 0.590 | 0.586 | 0.580 | 0.579 | 0.846 |
| f456/fmax | -0.713 | -0.718 | -0.720 | -0.665 | -0.650 | -2.504 |
| f456/f123 | -1.213 | -1.216 | -1.228 | -1.148 | -1.122 | -2.958 |
| Δd/ImgH | 0.833 | 0.833 | 0.836 | 0.833 | 0.833 | 0.584 |
| FOV_Z1/ImgH | 7.4389 | 7.45 | 7.4596 | 7.4611 | 7.4167 | 7.4111 |
| FOV_Z2/ImgH | 6.8444 | 6.9333 | 6.624 | 6.7278 | 6.7556 | 7.3139 |

The optical systems in the above embodiments have continuous internal focusing function and the characteristic of miniaturization.

Referring to FIG. 7, an embodiment of the present application further provides a lens module 20. The lens module 20 includes the optical system of any one of the above embodiments and a photosensitive chip. The photosensitive chip is disposed on the image side of the optical system, and the photosensitive chip and the optical system can be fixed by a bracket. The photosensitive chip can be a CCD sensor (Charge Coupled Device) or a CMOS sensor (Complementary Metal Oxide Semiconductor). In general, during assembly, the imaging surface IMG of the optical system overlaps with a photosensitive surface of the photosensitive chip. By adopting the above optical system, the lens module 20 can have the continuous internal focusing function and the characteristic of miniaturization.

Referring to FIG. 8, an embodiment of the present application further provides an electronic device 30. The electronic device 30 includes a housing 310 and the lens module 20 of the above embodiment. The lens module 20 is mounted on the housing 310. The housing 310 may be a display screen, a circuit board, a middle frame, a back cover, or other components. The electronic device 30 may be, but is not limited to, a smart phone, a smart watch, smart glasses, an e-book reader, a tablet computer, a biometric device (such as a fingerprint recognition device or a pupil recognition device, etc.), a PDA (Personal Digital Assistant), or the like. Since the lens module 20 can have the characteristic of miniaturization while having the continuous internal focusing function, when the lens module 20 is used, the electronic device 30 can provide a smaller space for assembling the lens module 20, thereby reducing a thickness of the device and making the shooting speed and focusing speed faster.

The above embodiments are only for describing but not intended to limit the present disclosure. Although the embodiments of the present disclosure have been described, those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

**Claims**

1. An optical system (10), **characterized in that**, the optical system (10) consists of six lenses having refractive power, from an object side to an image side along an optical axis (101), the six lenses sequentially comprises:

   a first lens (L1) having positive refractive power, and an object side surface (S1) of the first lens (L1) being convex near the optical axis (101);
   a second lens (L2) having negative refractive power, an object side surface (S3) of the second lens (L2) being convex near the optical axis (101), and an image side surface (S4) of the second lens (L2) being concave near the optical axis (101);
   a third lens (L3) having positive refractive power, an object side surface (S5) of the third lens (L3) being convex near the optical axis (101), and an image side surface (S6) of the third lens (L3) being convex near the optical axis (101);
   a fourth lens (L4) having negative refractive power, and an object side surface (S7) of the fourth lens (L4) being concave near the optical axis (101);
   a fifth lens (L5) having positive refractive power; and
   a sixth lens (L6) having refractive power;
   wherein the first lens (L1), the second lens (L2), and the third lens (L3) constitute a fixed lens group, the fourth lens (L4), the fifth lens (L5), and the sixth lens (L6) constitute a movable lens group, the fixed lens group is fixed relative to an imaging surface (IMG) of the optical system (10), and the movable lens group is movable between the fixed lens group and the imaging surface (IMG) along the optical axis (101);

the optical system (10) satisfies following relational expression:

$$1.05 < TTL/fmax < 1.25;$$

wherein, TTL is a distance from the object side surface (S1) of the first lens (L1) to the imaging surface (IMG) of the optical system (10) along the optical axis (101), and fmax is a maximum effective focal length of the optical system (10).

2.  The optical system (10) of claim 1, **characterized in that**, the optical system (10) further satisfies following relational expression:

$$0.4 < f123/fmax < 1;$$

wherein, f123 is a combined focal length of the first lens (L1), the second lens (L2), and the third lens (L3).

3.  The optical system (10) of claim 1, **characterized in that**, the optical system (10) further satisfies at least one of following relational expressions:

$$0.5 < f1/fmax < 1.5,$$

$$-0.9 < f2/fmax < -0.4,$$

$$0.3 < f3/fmax < 0.9,$$

$$-0.9 < f4/fmax < -0.4,$$

$$0.4 < f5/fmax,$$

$$|f6|/(|f1|+|f2|) < 3;$$

wherein, f1 is a focal length of the first lens (L1), f2 is a focal length of the second lens (L2), f3 is a focal length of the third lens (L3), f4 is a focal length of the fourth lens (L4), f5 is a focal length of the fifth lens (L5), and f6 is a focal length of the sixth lens (L6).

4.  The optical system (10) of claim 1, **characterized in that**, the optical system (10) further satisfies at least one of following relational expressions:

$$0.4 < R1/fmax < 1.2,$$

$$0.4 < R3/fmax < 1.1,$$

$$0.15 < R4/fmax < 0.6,$$

$$0.4 < R5/fmax < 1,$$

$$-0.85 < R6/fmax < -0.3,$$

$$-3 < R7/fmax < -0.15,$$

$$0.05 < SAG61/CT6 < 1.2,$$

$$0.3 < R7/R6 < 6;$$

wherein, R1 is a radius of curvature of the object side surface (S1) of the first lens (L1) at the optical axis (101), R3 is a radius of curvature of the object side surface (S3) of the second lens (L2) at the optical axis (101), R4 is a radius of curvature of the image side surface (S4) of the second lens (L2) at the optical axis (101), R5 is a radius of curvature of the object side surface (S5) of the third lens (L3) at the optical axis (101), R6 is a radius of curvature of the image side surface (S6) of the third lens (L3) at the optical axis (101), R7 is a radius of curvature of the object side surface (S7) of the fourth lens (L4) at the optical axis (101), SAG61 is a distance from an intersection of an object side surface of the sixth lens (L6) and the optical axis (101) to a position where the object side surface of the sixth lens (L6) has a maximum effective aperture along the optical axis (101), and CT6 is a thickness of the sixth lens (L6) at the optical axis (101).

5. The optical system (10) of claim 1, **characterized in that**, the optical system (10) further satisfies at least one of following relational expressions:

$$1mm < \Delta d < 5\ mm,\ 4 < TTL/\Delta d < 20,\ 0.4 < \Delta d/ImgH < 1;$$

wherein, $\Delta d$ is a maximum travel of the movable lens group on the optical axis (101), and ImgH is half of an image height corresponding to the maximum field view.

6. The optical system (10) of claim 1, **characterized in that**, the optical system (10) further satisfies at least one of following relational expressions:

$$1.5 < (CT1+CT2+CT3)/(CT4+CT5+CT6) < 3.5,$$

$$4 < CT5/\Sigma CT < 0.2 < 18,$$

$$0.2 < CT6/(CT4+CT5) < 1.8,$$

$$1.3 < TDmin/(CT1+CT2+CT3) < 2.5,$$

$$3.7 < TDmin/(CT4+CT5+CT6) < 5.5,$$

$$4 < (CT4+CT5+CT6)/AT56,$$

$$2 < (CT1+CT2+CT3)/(CT4+CT5) < 8,$$

$$0.35 < CT3/CT1 < 1.7,$$

$$0.2 < ET6/CT6 < 2;$$

wherein, CT1 is a thickness of the first lens (L1) at the optical axis (101), CT2 is a thickness of the second lens (L2) at the optical axis (101), CT3 is a thickness of the third lens (L3) at the optical axis (101), CT4 is a thickness of the fourth lens (L4) at the optical axis (101), CT5 is a thickness of the fifth lens (L5) at the optical axis (101), CT6 is a thickness of the sixth lens (L6) at the optical axis (101), $\Sigma CT$ is a sum of thicknesses of the first to sixth lens (L6)es at the optical axis (101), TDmin is a minimum distance from the object side surface (S1) of the first lens (L1) to an image side surface of the sixth lens (L6) along the optical axis (101), AT56 is an air distance between the fifth lens (L5) and the sixth lens (L6) on the optical axis (101), and ET6 is a distance from a position where an object side surface of the sixth lens (L6) has a maximum effective aperture to a position where an image side surface of the sixth lens (L6) has a maximum effective aperture along the optical axis (101).

7. The optical system (10) of claim 1, **characterized in that**, the optical system (10) further satisfies at least one of following relational expressions:

$$0.3<CT1/SD1<0.9, 0.9<SD1/ImgH<1.2;$$

wherein, CT1 is a thickness of the first lens (L1) at the optical axis (101), ImgH is half of an image height corresponding to the maximum field view, and SD1 is an effective aperture radius of the object side surface (S1) of the first lens (L1).

8. The optical system (10) of claim 1, **characterized in that**, the optical system (10) further satisfies at least one of following relational expressions:

$$4.5<TTL/ImgH<5, 5.5°/mm<FOV/ImgH<8.5°/mm;$$

wherein, ImgH half of an image height corresponding to the maximum field view, and FOV is a maximum field of view of the optical system (10).

9. The optical system (10) of claim 1, **characterized in that**, the optical system (10) further satisfies following relational expression:

$$20°<FOV<30°;$$

wherein, FOV is a maximum field of view of the optical system (10).

10. The optical system (10) of claim 1, **characterized in that**, the optical system (10) further satisfies following relational expression:

$$1.8<FNO<2.2;$$

wherein, FNO is an aperture number of the optical system (10).

11. The optical system (10) of claim 1, **characterized in that**, the optical system (10) further satisfies following relational expression:

$$-3.5<f456/fmax<-0.4;$$

wherein, f456 is a combined focal length of the fourth lens (L4), the fifth lens (L5), and the sixth lens (L6).

12. The optical system (10) of claim 1, **characterized in that**, the optical system (10) further satisfies following relational expression:

$$-5<f456/f123<-1;$$

wherein, f123 is a combined focal length of the first lens (L1), the second lens (L2), and the third lens (L3), and f456 is a combined focal length of the fourth lens (L4), the fifth lens (L5), and the sixth lens (L6).

13. The optical system (10) of claim 1, **characterized in that**, the optical system (10) further satisfies following relational expression:

$$1.35<SD1/SD12<1.9;$$

wherein, SD1 is an effective aperture radius of the object side surface (S1) of the first lens (L1), and SD12 is an effective aperture radius of an image side surface of the sixth lens (L6).

14. A lens module (20), **characterized in that**, the lens module comprises the optical system (10) of any one of claims 1 to 13 and a photosensitive chip, the photosensitive chip is located on an image side of the optical system (10).

15. An electronic device (30), **characterized in that**, the electronic device (30) comprises a housing (310) and the lens module (20) of claim 14, the lens module (20) is located in the housing (310).

Fig.1A

Fig.1B

STO L1 L2 L3 L4 L5 L6 IR IMG

10

101

S1 S2 S3 S4 S5 S6 S7 S8 S9 S10 S11 S12 S13 S14

Fig.1C

| | |
|---|---|
| 650.0000 nm | 555.0000 nm T |
| 610.0000 nm | 555.0000 nm S |
| 555.0000 nm | |
| 510.0000 nm | |
| 470.0000 nm | |
| 435.0000 nm | |

Longitudinal spherical aberration

Astigmatic field curves
Image height

Distortion
Image height

1.00

0.75

0.50

0.25

T          S  3.59

2.69

1.80

0.90

3.59

2.69

1.80

0.90

-0.10 -0.05 0.0 0.05 0.10
Focus point(mm)

-0.2 -0.1 0.0 0.1 0.2
Focus point(mm)

-5.0 -2.5 0.0 2.5 5.0
Distortion(%)

Fig.1D

Fig.2A

Fig.2B

STO  L1   L2   L3     L4   L5   L6    IR   IMG

10

101

S1  S2  S3  S4  S5  S6  S7  S8  S9  S10 S11 S12  S13   S14

Fig.2C

———————  650.0000 nm      ———————  555.0000 nm T
— — — — —  610.0000 nm     — — — — —  555.0000 nm S
—·—·—·—·  555.0000 nm
················  510.0000 nm
—·—·—·—  470.0000 nm
—··—··—··  435.0000 nm

Longitudinal spherical aberration

Astigmatic field curves
Image height

Distortion
Image height

1.00

0.75

0.50

0.25

T       S 3.59

2.69

1.80

0.90

3.59

2.69

1.80

0.90

-0.2  -0.1  0.0  0.1  0.2
Focus point(mm)

-0.50  -0.25  0.0  0.25  0.50
Focus point(mm)

-5.0  -2.5  0.0  2.5  5.0
Distortion(%)

Fig.2D

Fig.3A

Fig.3B

Fig.3C

Fig.3D

10

STO   L1   L2   L3   L4   L5   L6   IR   IMG

101

S1  S2  S3  S4  S5  S6  S7  S8  S9  S10 S11 S12  S13   S14

Fig.4A

——————————   650.0000 nm          ——————————   555.0000 nm T
— — — — — -   610.0000 nm          - - - - - - - -   555.0000 nm S
·—·—·—·—·—·   555.0000 nm
···················   510.0000 nm
—··—··—··—   470.0000 nm                 Astigmatic field curves              Distortion
—···—···—··   435.0000 nm                        Image height                  Image height

Longitudinal spherical aberration

-0.050 -0.025  0.0  0.025 0.050          -0.10  -0.05  0.0  0.05  0.10          -1.00 -0.50  0.0  0.50  1.00
     Focus point(mm)                          Focus point(mm)                       Distortion(%)

Fig.4B

STO   L1      L2      L3      L4      L5    L6    IR    IMG

10

101

S1  S2  S3  S4  S5  S6  S7  S8  S9  S10 S11 S12  S13    S14

Fig.4C

| | | |
|---|---|---|
| ──────── 650.0000 nm | ──────── 555.0000 nm T | |
| ── ── ── 610.0000 nm | ── ── ── 555.0000 nm S | |
| ── ── ── 555.0000 nm | | |
| ·············· 510.0000 nm | | |
| ─·─·─· 470.0000 nm | | |
| ─··─··─ 435.0000 nm | | |

Longitudinal spherical aberration

Astigmatic field curves
Image height

Distortion
Image height

1.00

0.75

0.50

0.25

S 3.61 T

2.71

1.80

0.90

3.61

2.71

1.80

0.90

-0.08 -0.04  0.0  0.04  0.08
Focus point(mm)

-0.50 -0.25  0.0  0.25  0.50
Focus point(mm)

-5.0 -2.5  0.0  2.5  5.0
Distortion(%)

Fig.4D

10

STO   L1    L2    L3    L4    L5    L6    IR    IMG

101

S1  S2  S3  S4  S5  S6  S7  S8  S9  S10 S11 S12  S13   S14

Fig.5A

|  | 650.0000 nm |  | 555.0000 nm T |
|---|---|---|---|
|  | 610.0000 nm |  | 555.0000 nm S |
|  | 555.0000 nm |  |  |
|  | 510.0000 nm |  |  |
|  | 470.0000 nm |  |  |
|  | 435.0000 nm |  |  |

Astigmatic field curves
Image height

Distortion
Image height

Longitudinal spherical aberration

1.00

0.75

0.50

0.25

-0.2  -0.1   0.0   0.1   0.2
Focus point(mm)

S  T
3.60

2.70

1.80

0.90

-0.050 -0.025  0.0  0.025 0.050
Focus point(mm)

3.60

2.70

1.80

0.90

-1.0  -0.5   0.0   0.5   1.0
Distortion(%)

Fig.5B

10

STO    L1    L2    L3    L4    L5    L6    IR    IMG

101

S1  S2  S3  S4  S5  S6  S7  S8  S9  S10 S11 S12  S13  S14

Fig.5C

—————— 650.0000 nm          —————— 555.0000 nm T
— — — — 610.0000 nm          — — — — 555.0000 nm S
— — — — 555.0000 nm
·················· 510.0000 nm
—·—·—·— 470.0000 nm
— · · — 435.0000 nm          Astigmatic field curves          Distortion
                                    Image height                Image height
Longitudinal spherical aberration

1.00                      T — S 3.61                       3.61

0.75                            2.71                       2.71

0.50                            1.80                       1.80

0.25                            0.90                       0.90

-0.2  -0.1  0.0   0.1  0.2   -0.8  -0.4  0.0   0.4  0.8   -5.0  -2.5  0.0   2.5  5.0
   Focus point(mm)              Focus point(mm)              Distortion(%)

Fig.5D

STO    L1    L2    L3    L4    L5    L6    IR    IMG

10

101

S1  S2  S3  S4  S5  S6  S7  S8  S9  S10 S11 S12  S13  S14

Fig.6A

| | |
|---|---|
| 650.0000 nm | 555.0000 nm T |
| 610.0000 nm | 555.0000 nm S |
| 555.0000 nm | |
| 510.0000 nm | |
| 435.0000 nm | |

Longitudinal spherical aberration

Astigmatic field curves
Image height

Distortion
Image height

1.00

0.75

0.50

0.25

-0.050 -0.025  0.0  0.025  0.050
Focus point(mm)

S, T    3.60

2.70

1.80

0.90

-0.050 -0.025  0.0  0.025 0.050
Focus point(mm)

3.60

2.70

1.80

0.90

-2    -1    0    1    2
Distortion(%)

Fig.6B

Fig.6C

Fig.6D

Fig.7

Fig.8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 815 152 A (JIANGXI JINGCHAO OPTICAL CO LTD) 29 July 2022 (2022-07-29) * figure 1a; tables 1a, 1b, 1d * | 1-15 | INV. G02B9/10 G02B13/00 G02B15/14 |
| A | CN 114 815 153 A (JIANGXI JINGCHAO OPTICAL CO LTD) 29 July 2022 (2022-07-29) * figure 1a; tables 1a,1b * | 1 | |
| A | CN 116 500 760 A (JIANGXI OUFEI OPTICS CO LTD) 28 July 2023 (2023-07-28) * figure 1a; table 1 * | 1 | |
| A | KR 102 500 891 B1 (SAMSUNG ELECTRO MECH [KR]) 17 February 2023 (2023-02-17) * figures 1,3 * | 1 | |
| A | US 2022/035126 A1 (ZHAO LIEFENG [CN] ET AL) 3 February 2022 (2022-02-03) * figure 1; tables 1,2 * | 1 | |
| | | | TECHNICAL FIELDS SEARCHED (IPC) G02B |

The present search report has been drawn up for all claims

| Place of search | Date of completion of the search | Examiner |
|---|---|---|
| Munich | 14 February 2025 | Stemmer, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 1632

This annex lists the patent family members relating to the patent documents cited in  the above-mentioned European search report.
The members are as contained in the European Patent Office EDP file on
The European Patent Office is in no way liable for these particulars which are merely given for the purpose of information.

14-02-2025

| Patent document cited in search report | | Publication date | Patent family member(s) | | Publication date |
|---|---|---|---|---|---|
| CN 114815152 | A | 29-07-2022 | NONE | | |
| CN 114815153 | A | 29-07-2022 | NONE | | |
| CN 116500760 | A | 28-07-2023 | NONE | | |
| KR 102500891 | B1 | 17-02-2023 | NONE | | |
| US 2022035126 | A1 | 03-02-2022 | CN | 111679410 A | 18-09-2020 |
| | | | US | 2022035126 A1 | 03-02-2022 |

EPO FORM P0459